# EUROPEAN PATENT APPLICATION

(11) **EP 4 429 320 A1**
(43) Date of publication of application: **11.09.2024**
(21) Application number: 22890413.2
(22) Date of filing: 03.11.2022
(51) Int. Cl.: H04W 24/10, H04W 8/24, H04W 64/00, H04B 17/318, H04B 17/364

(54) **METHOD FOR TRANSMITTING/RECEIVING INFORMATION ABOUT PRS MEASUREMENT IN WIRELESS COMMUNICATION SYSTEM, AND APPARATUS THEREFOR**

(30) Priority: 03.11.2021 KR 20210150006
(71) Applicant: LG Electronics Inc., Yeongdeungpo-gu Seoul 07336 (KR)
(72) Inventor: LEE, Jeongsu, Seoul 06772 (KR); KIM, Kijun, Seoul 06772 (KR); KO, Hyunsoo, Seoul 06772 (KR); PARK, Haewook, Seoul 06772 (KR)
(74) Representative: Frenkel, Matthias Alexander
(86) International application number: PCT/KR2022/017151
(87) International publication number: WO 2023/080682

(57) **Abstract**

A method of a user equipment (UE) for transmitting information on a measurement of a positioning reference signal (PRS) in a wireless communication system comprises transmitting a message including capability information to a location server, receiving the PRS from a base station, and transmitting a message including the information on the measurement of the PRS to the location server. The capability information includes i) information representing whether to support a measurement for a first path related to the PRS and/or ii) information representing whether to support a measurement for at least one additional path related to the PRS.

## Description

### [TECHNICAL FIELD]

The present disclosure relates to a method of transmitting and receiving information for measurement of a PRS in a wireless communication system and a device therefor.

### [BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

According to the existing method, a value (e.g., DL PRS RSRP) reported for positioning is determined based on a linear average of received strengths for REs in which a PRS is transmitted. In the positioning, whether a signal path between a base station and a UE is line of sight (LoS) or non-line of sight (NLoS) is more important than a channel environment (i.e., a channel environment related to signal intensity). However, it cannot be determined whether the path taken by the signal is the line of sight (LoS) or the non-line of sight (NLoS) through a magnitude of the RSRP. Hence, in Rel.17, reporting of path-specific measurement values (e.g., DL PRS RSRPP) has been introduced. The UE may report measurement information per path related to the PRS.

### [DISCLOSURE]

### [TECHNICAL PROBLEM]

The following problems related to a path-specific measurement of a UE may occur.

An unnecessary signaling overhead may increase. This is described in detail below.

There is a need to specifically define whether the UE supports the path-specific measurement, and if so, whether the UE supports measurement for a first path or measurements for additional paths. That is, if a request for information on the path-specific measurement is made without considering a capability for each UE, the unnecessary signaling overhead may increase. For example, since a location server (e.g., LMF) can transmit a message requesting DL PRS RSRPP (e.g., LPP message) to the UEs not supporting the path-specific measurement, the unnecessary signaling overhead may increase.

Reporting of path-specific measurement values may not contribute to improving positioning accuracy. This is described in detail below.

If the path-specific measurement is supported by a specific UE, measurement values that do not contribute to the LoS/NLoS determination may be reported. In this case, reporting of the path-specific measurement values may increase the signaling overhead and may have little contribution to improving the positioning accuracy.

An object of the present disclosure is to minimize an unnecessary signaling overhead in a report for PRS measurement of a UE.

Another object of the present disclosure is to report realistic values in terms of positioning accuracy in a report for PRS measurement.

The technical objects of the present disclosure are not limited to the aforementioned technical objects, and other technical objects, which are not mentioned above, will be apparently appreciated by a person having ordinary skill in the art from the following description.

### [TECHNICAL SOLUTION]

A method of a user equipment (UE) for transmitting information on a measurement of a positioning reference signal (PRS) in a wireless communication system according to an embodiment of the present disclosure comprises transmitting, to a location server, a message including capability information, receiving the PRS from a base station, and transmitting, to the location server, a message including the information on the measurement of the PRS. The capability information includes information related to a positioning method supported by the UE.

The information on the measurement of the PRS includes a DL PRS reference signal received path power (RSRPP) for one or more paths related to the PRS.

The capability information includes i) information representing whether to support a measurement for a first path related to the PRS and/or ii) information representing whether to support a measurement for at least one additional path related to the PRS.

The method may further comprise receiving, from the location server, a message including request information for the measurement of the PRS. The request information for the measurement of the PRS may include i) information indicating a provision of the measurement for the first path and/or ii) information indicating a provision of the measurement for the at least one additional path.

The information on the measurement of the PRS may include i) timing information related to each path of the at least one additional path and ii) information representing a quality related to each path of the at least one additional path.

The method may further comprise receiving, from the location server, a message including request information for the capability information.

Based on the one or more paths related to the PRS including the first path and the at least one additional path, a DL PRS RSRPP related to the at least one additional path may be greater than a minimum threshold determined based on a DL PRS RSRPP related to the first path and a preset offset.

The positioning method may be i) a downlink-time difference of arrival (DL-TDOA) positioning method or ii) a multi-round trip time (RTT) positioning method.

The message including the capability information may be transmitted based on an LTE positioning protocol (LPP) procedure, and the message including the information on the measurement of the PRS may be transmitted based on the LPP procedure.

The information representing whether to support the measurement for the at least one additional path related to the PRS may indicate a number of additional paths supported by the UE.

The DL PRS RSRPP included in the information on the measurement of the PRS may be based on a DL PRS RSRPP with a value within a pre-defined range among DL PRS RSRPPs measured for the one or more paths related to the PRS. The pre-defined range may be determined based on an expected value related to the DL PRS RSRPP and range information related to the expected value.

The method may further comprise receiving, from the location server, configuration information including the expected value related to the DL PRS RSRPP and the range information related to the expected value.

A user equipment (UE) configured to transmit information on a measurement of a positioning reference signal (PRS) in a wireless communication system according to another embodiment of the present disclosure comprises one or more transceivers, one or more processors configured to control the one or more transceivers, and one or more memories operably connected to the one or more processors.

The one or more memories are configured to store instructions performing operations based on being executed by the one or more processors.

The operations comprise transmitting, to a location server, a message including capability information, receiving the PRS from a base station, and transmitting, to the location server, a message including the information on the measurement of the PRS. The capability information includes information related to a positioning method supported by the UE.

The information on the measurement of the PRS includes a DL PRS reference signal received path power (RSRPP) for one or more paths related to the PRS.

The capability information includes i) information representing whether to support a measurement for a first path related to the PRS and/or ii) information representing whether to support a measurement for at least one additional path related to the PRS.

A device controlling a user equipment (UE) to transmit information on a measurement of a positioning reference signal (PRS) in a wireless communication system according to another embodiment of the present disclosure comprises one or more processors, and one or more memories operably connected to the one or more processors.

The one or more memories are configured to store instructions performing operations based on being executed by the one or more processors.

The operations comprise transmitting, to a location server, a message including capability information, receiving the PRS from a base station, and transmitting, to the location server, a message including the information on the measurement of the PRS. The capability information includes information related to a positioning method supported by the UE.

The information on the measurement of the PRS includes a DL PRS reference signal received path power (RSRPP) for one or more paths related to the PRS.

The capability information includes i) information representing whether to support a measurement for a first path related to the PRS and/or ii) information representing whether to support a measurement for at least one additional path related to the PRS.

One or more non-transitory computer readable mediums according to another embodiment of the present disclosure store one or more instructions. The one or more instructions perform operations based on being executed by one or more processors.

The operations comprise transmitting, to a location server, a message including capability information, receiving the PRS from a base station, and transmitting, to the location server, a message including the information on the measurement of the PRS. The capability information includes information related to a positioning method supported by the UE.

The information on the measurement of the PRS includes a DL PRS reference signal received path power (RSRPP) for one or more paths related to the PRS.

The capability information includes i) information representing whether to support a measurement for a first path related to the PRS and/or ii) information representing whether to support a measurement for at least one additional path related to the PRS.

A method of a location server for receiving information on a measurement of a positioning reference signal (PRS) in a wireless communication system according to another embodiment of the present disclosure comprises receiving, from a user equipment (UE), a message including capability information, and receiving, from the UE, a message including the information on the measurement of the PRS. The capability information includes information related to a positioning method supported by the UE.

The information on the measurement of the PRS includes a DL PRS reference signal received path power (RSRPP) for one or more paths related to the PRS.

The capability information includes i) information representing whether to support a measurement for a first path related to the PRS and/or ii) information representing whether to support a measurement for at least one additional path related to the PRS.

A location server receiving information on a measurement of a positioning reference signal (PRS) in a wireless communication system according to another embodiment of the present disclosure comprises one or more transceivers, one or more processors configured to control the one or more transceivers, and one or more memories operably connected to the one or more processors.

The one or more memories are configured to store instructions performing operations based on being executed by the one or more processors.

The operations comprise receiving, from a user equipment (UE), a message including capability information, and receiving, from the UE, a message including the information on the measurement of the PRS. The capability information includes information related to a positioning method supported by the UE.

The information on the measurement of the PRS includes a DL PRS reference signal received path power (RSRPP) for one or more paths related to the PRS.

The capability information includes i) information representing whether to support a measurement for a first path related to the PRS and/or ii) information representing whether to support a measurement for at least one additional path related to the PRS.

### [ADVANTAGEOUS EFFECTS]

According to embodiments of the present disclosure, whether a path specific measurement report is supported by a UE (e.g., whether to support a measurement for a first path of PRS) is reported to a location server. Hence, a reporting operation for path specific measurement information based on a request of the location server can be performed more efficiently in terms of signaling overhead.

Whether to support additional paths in addition to the first path can be reported additionally. Therefore, a request for path specific measurement information based on a capability of each UE of UEs supporting a path specific measurement can be sub-divided and performed. That is, reporting of measurement information can be performed making full use of the capability of the UE.

According to embodiments of the present disclosure, a value (e.g., value greater than a minimum threshold) determined by a preset threshold among measurement values (e.g., multiple DL PRS RSRPPs) for the additional path related to PRS is reported to the UE. Since meaningful values for LoS/NLoS determination can be reported, positioning accuracy can be improved. Based on the threshold, measurement values (that do not contribute to determining LoS/NLoS) can be excluded from reporting. Accordingly, the path-specific measurement reporting operation can be improved in terms of signaling overhead.

Effects which may be obtained by the present disclosure are not limited to the aforementioned effects, and other technical effects not described above may be evidently understood by a person having ordinary skill in the art to which the present disclosure pertains from the following description.

### [BRIEF DESCRIPTION OF THE DRAWINGS]

The accompanying drawings, which are included to provide a further understanding of the present disclosure and constitute a part of the detailed description, illustrate embodiments of the present disclosure and together with the description serve to explain the principle of the present disclosure.
FIG. 1 illustrates an example of an overall system structure of NR to which a method proposed in the present disclosure is applicable.
FIG. 2 illustrates a relationship between an uplink frame and a downlink frame in a wireless communication system to which a method proposed by the present disclosure is applicable.
FIG. 3 illustrates an example of a frame structure in an NR system.
FIG. 4 illustrates an example of a resource grid supported by a wireless communication system to which a method proposed in the present disclosure is applicable.
FIG. 5 illustrates examples of a resource grid for each antenna port and numerology to which a method proposed in the present disclosure is applicable.
FIG. 6 illustrates physical channels and general signal transmission used in a 3GPP system.
FIG. 7 illustrates an example of a positioning protocol configuration for measuring a location of a user equipment (UE).
FIG. 8 illustrates an example of architecture of a system for measuring a location of an UE.
FIG. 9 illustrates an example of a procedure for measuring a location of a UE.
FIG. 10 illustrates an example of a protocol layer for supporting LPP message transmission.
FIG. 11 illustrates an example of a protocol layer for supporting NRPPa transmission.
FIG. 12 illustrates an example of an OTDOA positioning measurement method.
FIGS. 13A and 13B illustrate an example of a Multi RTT positioning measurement method.
FIG. 14 is a flowchart illustrating a method for a UE to transmit information on measurement of PRS in a wireless communication system according to an embodiment of the present disclosure.
FIG. 15 is a flowchart illustrating a method for a location server to receive information on measurement of PRS in a wireless communication system according to another embodiment of the present disclosure.
FIG. 16 illustrates a communication system 1 applied to the present disclosure.
FIG. 17 illustrates wireless devices applicable to the present disclosure.
FIG. 18 illustrates a signal process circuit for a transmission signal.
FIG. 19 illustrates another example of a wireless device applied to the present disclosure.
FIG. 20 illustrates a hand-held device applied to the present disclosure.

### [DETAILED DESCRIPTION]

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11(Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

For clarity of description, the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a standard document detail number. The LTE/NR may be collectively referred to as the 3GPP system. Matters disclosed in a standard document published before the present disclosure may refer to a background art, terms, abbreviations, etc., used for describing the present disclosure. For example, the following documents may be referenced.
3GPP LTE
   36.211: Physical channels and modulation
   36.212: Multiplexing and channel coding
   36.213: Physical layer procedures
   36.300: Overall description
   36.331: Radio Resource Control (RRC)
3GPP NR
   38.211: Physical channels and modulation
   38.212: Multiplexing and channel coding
   38.213: Physical layer procedures for control
   38.214: Physical layer procedures for data
   38.300: NR and NG-RAN Overall Description
   36.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/UE sensitive to reliability and latency is being discussed. As such, the introduction of next-generation radio access technology considering enhanced mobile broadband communication (eMBB), massive MTC (mMTC), ultra-reliable and low latency communication (URLLC) is discussed, and in the present disclosure, the technology is called NR for convenience. The NR is an expression representing an example of 5G radio access technology (RAT).

In a New RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. By scaling a reference subcarrier spacing by an integer N, different numerologies may be defined.

### Definition of terms

eLTE eNB: The eLTE eNB is the evolution of eNB that supports connectivity to EPC and NGC.
gNB: A node which supports the NR as well as connectivity to NGC.
New RAN: A radio access network which supports either NR or E-UTRA or interfaces with the NGC.
Network slice: A network slice is a network defined by the operator customized to provide an optimized solution for a specific market scenario which demands specific requirements with end-to-end scope.
Network function: A network function is a logical node within a network infrastructure that has well-defined external interfaces and well-defined functional behavior.
NG-C: A control plane interface used at an NG2 reference point between new RAN and NGC.
NG-U: A user plane interface used at an NG3 reference point between new RAN and NGC.
Non-standalone NR: A deployment configuration where the gNB requires an LTE eNB as an anchor for control plane connectivity to EPC, or requires an eLTE eNB as an anchor for control plane connectivity to NGC.
Non-standalone E-UTRA: A deployment configuration where the eLTE eNB requires a gNB as an anchor for control plane connectivity to NGC.
User plane gateway: An end point of NG-U interface.

### Overview of system

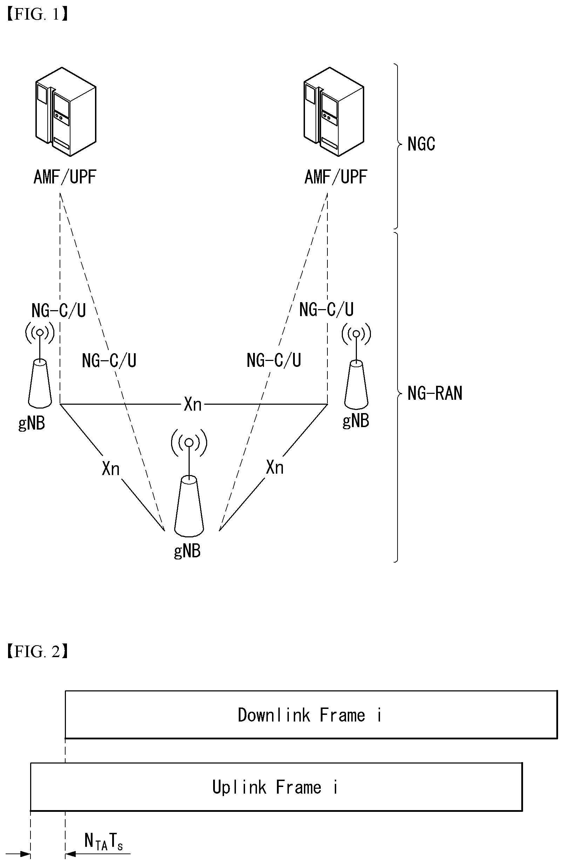

FIG. 1 illustrates an example overall NR system structure to which a method as proposed in the disclosure may apply.

Referring to FIG. 1, an NG-RAN is constituted of gNBs to provide a control plane (RRC) protocol end for user equipment (UE) and NG-RA user plane (new AS sublayer/PDCP/RLC/MAC/PHY).

The gNBs are mutually connected via an Xn interface.

The gNBs are connected to the NGC via the NG interface.

More specifically, the gNB connects to the access and mobility management function (AMF) via the N2 interface and connects to the user plane function (UPF) via the N3 interface.

### New RAT (NR) numerology and frame structure

In the NR system, a number of numerologies may be supported. Here, the numerology may be defined by the subcarrier spacing and cyclic prefix (CP) overhead. At this time, multiple subcarrier spacings may be derived by scaling the basic subcarrier spacing by integer N (or, *µ*). Further, although it is assumed that a very low subcarrier spacing is not used at a very high carrier frequency, the numerology used may be selected independently from the frequency band.

Further, in the NR system, various frame structures according to multiple numerologies may be supported.

Hereinafter, an orthogonal frequency division multiplexing (OFDM) numerology and frame structure that may be considered in the NR system is described.

The multiple OFDM numerologies supported in the NR system may be defined as shown in Table 1.

**[Table 1]**

| µ | Δ*f*=2*^{µ}*·15[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

NR supports multiple numerologies (or subcarrier spacings (SCS)) for supporting various 5G services. For example, if SCS is 15 kHz, NR supports a wide area in typical cellular bands. If SCS is 30 kHz/60 kHz, NR supports a dense urban, lower latency and a wider carrier bandwidth. If SCS is 60 kHz or higher, NR supports a bandwidth greater than 24.25 GHz in order to overcome phase noise.

An NR frequency band is defined as a frequency range of two types FR1 and FR2. The FR1 and the FR2 may be configured as in Table 1 below. Furthermore, the FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

With regard to the frame structure in the NR system, the size of various fields in the time domain is expressed as a multiple of time unit of *T*ₛ=1/(Δ*f*ₘₐₓ·*N*_{f}), where Δ*f*ₘₐₓ=480.10³, and *N*_{f}=4096 Downlink and uplink transmissions is constituted of a radio frame with a period of *T*_{f} = (Δ*f*ₘₐₓN*_{f}*/100)·*T*ₛ = 10 ms. Here, the radio frame is constituted of 10 subframes each of which has a period of *T*_{sf} = (Δ*f*ₘₐₓN*_{f}*/1000)·*T*ₛ = 1 ms. In this case, one set of frames for uplink and one set of frames for downlink may exist.

FIG. 2 illustrates a relationship between an uplink frame and downlink frame in a wireless communication system to which a method described in the present disclosure is applicable.

As illustrated in FIG. 2, uplink frame number i for transmission from the user equipment (UE) should begin *T*_{TA} = *N*_{TA}*T*ₛ earlier than the start of the downlink frame by the UE.

For numerology *µ*, slots are numbered in ascending order of ${n}_{s}^{μ} ∈ \left\{0,…,{N}_{subframe}^{slots , μ}-1\right\}$ in the subframe and in ascending order of ${n}_{s ,f}^{μ} ∈ \left\{0,…,{N}_{frame}^{slots , μ}-1\right\}$ in the radio frame. One slot includes consecutive OFDM symbols of ${N}_{symb}^{μ}$, and ${N}_{symb}^{μ}$ is determined according to the used numerology and slot configuration. In the subframe, the start of slot ${n}_{s}^{μ}$ is temporally aligned with the start of ${n}_{s}^{μ} {N}_{symb}^{μ}$.

Not all UEs are able to transmit and receive at the same time, and this means that not all OFDM symbols in a downlink slot or an uplink slot are available to be used.

Table 3 represents the number ${N}_{symb}^{slot}$ of OFDM symbols per slot, the number ${N}_{slot}^{frame , μ}$ of slots per radio frame, and the number ${N}_{slot}^{subframe , μ}$ of slots per subframe in a normal CP. Table 4 represents the number of OFDM symbols per slot, the number of slots per radio frame, and the number of slots per subframe in an extended CP.

**[Table 3]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| *µ* | ${N}_{symb}^{slot}$ | ${N}_{slot}^{frame , μ}$ | ${N}_{slot}^{subframe , μ}$ |
|---|---|---|---|
| 2 | 12 | 40 | 4 |

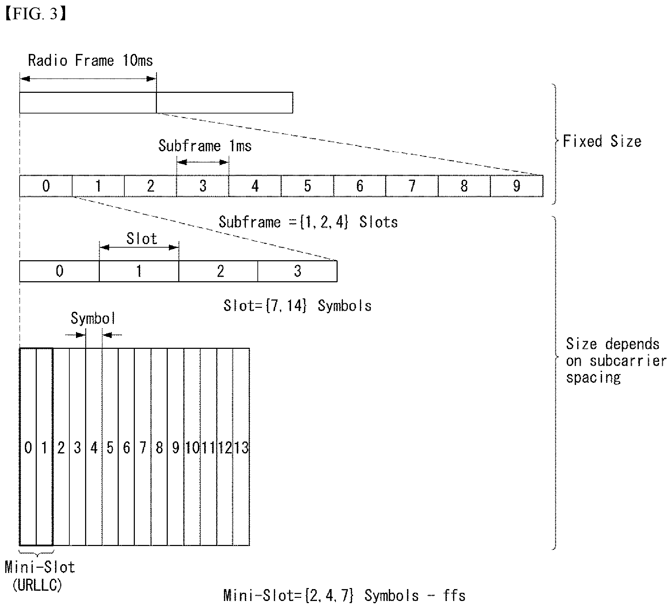

FIG. 3 illustrates an example of a frame structure in a NR system. FIG. 3 is merely for convenience of explanation and does not limit the scope of the present disclosure.

In Table 4, in case of *µ*=2, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. May be considered.

Hereinafter, the above physical resources that may be considered in the NR system are described in more detail.

First, in regard to an antenna port, the antenna port is defined so that a channel over which a symbol on an antenna port is conveyed may be inferred from a channel over which another symbol on the same antenna port is conveyed. When large-scale properties of a channel over which a symbol on one antenna port is conveyed may be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

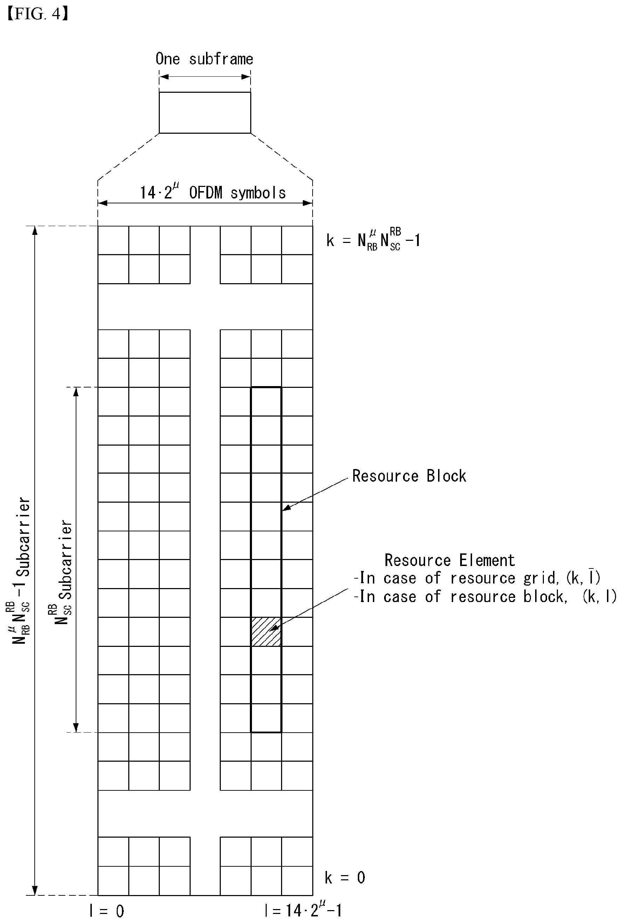

FIG. 4 illustrates an example of a resource grid supported in a wireless communication system to which a method proposed in the present disclosure is applicable.

Referring to FIG. 4, a resource grid consists of ${N}_{RB}^{μ} {N}_{sc}^{RB}$ subcarriers on a frequency domain, each subframe consisting of 14·2µ OFDM symbols, but the present disclosure is not limited thereto.

In the NR system, a transmitted signal is described by one or more resource grids, consisting of ${N}_{RB}^{μ} {N}_{sc}^{RB}$ subcarriers, and ${2}^{μ} {N}_{symb}^{\left(μ\right)}$ OFDM symbols, where ${N}_{RB}^{μ} \leq {N}_{RB}^{max , μ}$*.* ${N}_{RB}^{max , μ}$ denotes a maximum transmission bandwidth and may change not only between numerologies but also between uplink and downlink.

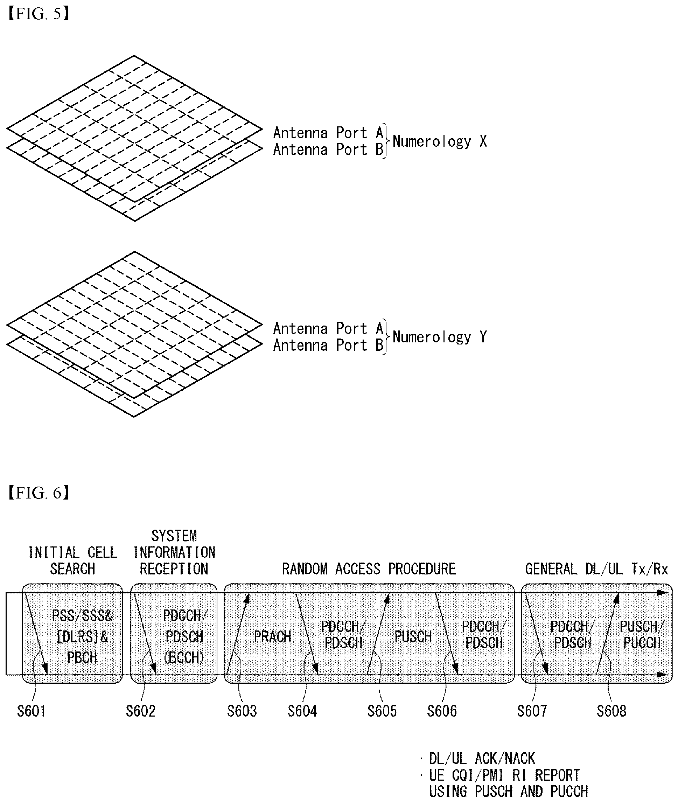

In this case, as illustrated in FIG. 5, one resource grid may be configured per numerology *µ* and antenna port p.

FIG. 5 illustrates examples of a resource grid per antenna port and numerology to which a method proposed in the present disclosure is applicable.

Each element of the resource grid for the numerology *µ* and the antenna port p is called a resource element and is uniquely identified by an index pair (*k*,*l̅*), where $k = 0 , … , {N}_{RB}^{μ} {N}_{sc}^{RB} - 1$ is an index on a frequency domain, and $\overline{l} = 0 , … {, 2}^{μ} {N}_{symb}^{\left(μ\right)} - 1$ refers to a location of a symbol in a subframe. The index pair (*k*,*l̅*) is used to refer to a resource element in a slot, where $l = 0 , … , {N}_{symb}^{μ} - 1$.

The resource element (k,l̅) for the numerology *µ* and the antenna port p corresponds to a complex value ${a}_{k , \overline{l}}^{\left(p, μ\right)}$. When there is no risk for confusion or when a specific antenna port or numerology is not specified, the indexes p and *µ* may be dropped, and as a result, the complex value may be ${a}_{k , \overline{l}}^{\left(p\right)}$ or ${a}_{k , \overline{l}} .$

Further, a physical resource block is defined as ${N}_{sc}^{RB} = 12$ consecutive subcarriers in the frequency domain.

Point A serves as a common reference point of a resource block grid and may be obtained as follows.
- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN).

The common resource blocks are numbered from 0 and upwards in the frequency domain for subcarrier spacing configuration *µ*.

The center of subcarrier 0 of common resource block 0 for the subcarrier spacing configuration *µ* coincides with 'point A'. A common resource block number ${n}_{CRB}^{μ}$ in the frequency domain and resource elements (k, l) for the subcarrier spacing configuration *µ* may be given by the following Equation 1.${n}_{CRB}^{μ} = ⌊ \frac{k}{{N}_{sc}^{RB}} ⌋$

Here, *k* may be defined relative to the point A so that *k* = 0 corresponds to a subcarrier centered around the point A. Physical resource blocks are defined within a bandwidth part (BWP) and are numbered from 0 to ${N}_{BWP , i}^{size} - 1$, where *i* is No. Of the BWP. A relation between the physical resource block *n*_{PRB} in BWP *i* and the common resource block *n*_{CRB} may be given by the following Equation 2.${n}_{CRB} = {n}_{PRB} + {N}_{BWP , i}^{start}$

Here, ${N}_{BWP , i}^{start}$ may be the common resource block where the BWP starts relative to the common resource block 0.

### Physical Channel and General Signal Transmission

FIG. 6 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S601). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S602).

Meanwhile, when there is no radio resource first accessing the eNB or for signal transmission, the UE may perform a Random Access Procedure (RACH) to the eNB (S603 to S606). To this end, the UE may transmit a specific sequence to a preamble through a Physical Random Access Channel (PRACH) (S603 and S605) and receive a response message (Random Access Response (RAR) message) for the preamble through the PDCCH and a corresponding PDSCH. In the case of a contention based RACH, a Contention Resolution Procedure may be additionally performed (S606).

The UE that performs the above procedure may then perform PDCCH/PDSCH reception (S607) and Physical Uplink Shared Channel (PUSCH)/Physical Uplink Control Channel (PUCCH) transmission (S608) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

### Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.
- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS). Further, each BM procedure may include Tx beam sweeping for determining the Tx beam and Rx beam sweeping for determining the Rx beam.

### Downlink Beam Management (DL BM)

The DL BM procedure may include (1) transmission of beamformed DL reference signals (RSs) (e.g., CIS-RS or SS Block (SSB)) of the eNB and (2) beam reporting of the UE.

Here, the beam reporting a preferred DL RS identifier (ID)(s) and L1-Reference Signal Received Power (RSRP).

The DL RS ID may be an SSB Resource Indicator (SSBRI) or a CSI-RS Resource Indicator (CRI).

Hereinafter, matters related to the definition of TRP mentioned in the present specification will be described in detail.

The base station described in this disclosure may be a generic term for an object that transmits/receives data to and from UE. For example, the base station described herein may be a concept including one or more transmission points (TPs), one or more transmission and reception points (TRPs), and the like. For example, multiple TPs and/or multiple TRPs described herein may be included in one base station or included in multiple base stations. In addition, the TP and/or TRP may include a panel of a base station, a transmission and reception unit, and the like.

In addition, the TRP described in this disclosure means an antenna array having one or more antenna elements available in a network located at a specific geographical location in a specific area. Although this disclosure is described with respect to "TRP" for convenience of explanation, the TRP may be replaced with a base station, a transmission point (TP), a cell (e.g., a macro cell/small cell/pico cell, etc.), an antenna array, or a panel and understood and applied as such.

Hereinafter, matters related to positioning in a wireless communication system will be described in detail.

Table 5 below shows definitions of terms used in relation to the positioning.

**[Table 5]**

| |
|---|
| **Anchor carrier:** In NB-IoT, a carrier where the UE assumes that NPSS/NSSS/NPBCH/SIB-NB are tran smitted. |
| **Location Server:** a physical or logical entity (e.g., E-SMLC or SUPL SLP) that manages positioning for a target device by obtaining measurements and other location information from one or more positioning units and providing assistance data to positioning units to help determine this. A Location Server may also compute or verify the final location estimate. |
| **E-SMLC:** Evolved Serving Mobile Location Center |
| **SLP:** SUPL Location Platform |
| **SUPL:** Secure User Plane Location |
| **NB-IoT:** NB-IoT allows access to network services via E-UTRA with a channel bandwidth limited to 200 kHz. |
| **Reference Source:** a physical entity or part of a physical entity that provides signals (e.g., RF, acoustic, infra-red) that can be measured (e.g., by a Target Device) in order to obtain the location of a Target Device. |
| **Target Device:** the device that is being positioned (e.g., UE or SUPL SET). |
| **Transmission Point (TP):** A set of geographically co-located transmit antennas for one cell, part of one cell or one PRS-only TP. Transmission Points can include base station (ng-eNB or gNB) antennas, remote radio heads, a remote antenna of a base station, an antenna of a PRS-only TP, etc. One cell can be formed by one or multiple transmission points. For a homogeneous deployment, each transmission point may correspond to one cell. |
| **Observed Time Difference Of Arrival (OTDOA):** The time interval that is observed by a target device between the reception of downlink signals from two different TPs. If a signal from TP 1 is received at the moment *t₁,* and a signal from TP 2 is received at the moment *t₂*, the OTDOA is *t₂* - *t₁.* |
| **PRS-only TP:** A TP which only transmits PRS signals for PRS-based TB S positioning and is not associated with a cell. |

| **expected RSTD (from 36.355):** |
|---|
| 1) If PRS is transmitted: |
| This field indicates the RSTD value that the target device is expected to measure between this cell and the assistance data reference cell. The expectedRSTD field takes into account the expected propagation time difference as well as transmit time difference of PRS positioning occasions between the two cells. The RSTD value can be negative and is calculated as (expectedRSTD-8192). The resolution is 3×Tₛ, with Tₛ=1/(15000*2048) seconds. |
| 2) If PRS is not transmitted: |
| This field indicates the RSTD value that the target device is expected to measure between this cell and the assistance data reference cell. The expectedRSTD field takes into account the expected propagation time difference as well as transmit time difference between the two cells. The RSTD value can be negative and is calculated as (expectedRSTD-8192). The resolution is 3×Tₛ, with Tₛ=1/(15000*2048) seconds. |

| **expectedRSTD-Uncertainty (from 36.355):** |
|---|
| 1) If PRS is transmitted: |
| This field indicates the uncertainty in *expectedRSTD* value. The uncertainty is related to the local ion server's a-priori estimation of the target device location. The *expectedRSTD* and *expectedRST D-Uncertainty* together define the search window for the target device. |
| The scale factor of the *expectedRSTD-Uncertainty* field is 3×Tₛ, with Tₛ=1/(15000*2048) seconds. |
| The target device may assume that the beginning of the PRS occasion group of the PRS configu ration with the longest PRS occasion group periodicity (NOTE) of the neighbour cell is received within the search window of size |
| [- *expectedRSTD-Uncertainty×*3×Tₛ, *expectedRSTD-Uncertainty*×3×Tₛ] centered at T_{REF} + 1 millisecond×N + (*expectedRSTD*□8192) ×3×Tₛ, where T_{REF} is the reception time of the beginning of the first PRS occasion group of the first PRS configuration of the assistance data r eference cell at the target device antenna connector, N = 0 when the EARFCN of the neighbour cell is equal to that of the assistance data reference cell, and N = *prs-SubframeOffset* otherwise. |
| 2) If PRS is not transmitted: |
| This field indicates the uncertainty in *expectedRSTD* value. The uncertainty is related to the local ion server's a-priori estimation of the target device location. The *expectedRSTD* and *expectedRST D-Uncertainty* together define the search window for the target device. The scale factor of the *ex pectedRSTD-Uncertainty* field is 3×Tₛ, with Tₛ=1/(15000*2048) seconds. |
| If Tₓ is the reception time of the beginning of the subframe X of the assistance data reference cell at the target device antenna connector, the target device may assume that the beginning of the closest subframe of this neighbour cell to subframe X is received within the search window of size [-*expectedRSTD-Uncertainty*×3×Tₛ, *expectedRSTD-Uncertainty*×3×Tₛ] centered at Tₓ + (*expectedRSTD*-8192)×3×Tₛ, |

The following shows definitions of abbreviations used in relation to the above positioning.
5GS: 5G System
AoA: Angle of Arrival
AP: Access Point
BDS: BeiDou Navigation Satellite System
BSSID: Basic Service Set Identifier
CID: Cell-ID (positioning method)
E-SMLC: Enhanced Serving Mobile Location Centre
E-CID: Enhanced Cell-ID (positioning method)
ECEF: Earth-Centered, Earth-Fixed
ECI: Earth-Centered-Inertial
EGNOS: European Geostationary Navigation Overlay Service
E-UTRAN: Evolved Universal Terrestrial Radio Access Network
GAGAN: GPS Aided Geo Augmented Navigation
GLONASS: GLObal'naya NAvigatsionnaya Sputnikovaya Sistema (Engl.: Global Navigation Satellite System)
GMLC: Gateway Mobile Location Center
GNSS: Global Navigation Satellite System
GPS: Global Positioning System
HESSID: Homogeneous Extended Service Set Identifier
LCS: LoCation Services
LMF: Location Management Function
LPP: LTE Positioning Protocol
MBS: Metropolitan Beacon System
MO-LR: Mobile Originated Location Request
MT-LR: Mobile Terminated Location Request
NG-C: NG Control plane
NG-AP: NG Application Protocol
NI-LR: Network Induced Location Request
NRPPa: NR Positioning Protocol A
OTDOA: Observed Time Difference Of Arrival
PDU: Protocol Data Unit
PRS: Positioning Reference Signal
QZSS: Quasi-Zenith Satellite System
RRM: Radio Resource Management
RSSI: Received Signal Strength Indicator
RSTD: Reference Signal Time Difference / Relative Signal Time Difference
SBAS: Space Based Augmentation System
SET: SUPL Enabled Terminal
SLP: SUPL Location Platform
SSID: Service Set Identifier
SUPL: Secure User Plane Location
TADV: Timing Advance
TBS: Terrestrial Beacon System
TOA: Time of Arrival
TP: Transmission Point (TRP : Transmission and Reception Point)
UE: User Equipment
WAAS: Wide Area Augmentation System
WGS-84: World Geodetic System 1984
WLAN: Wireless Local Area Network

### Positioning

Positioning may mean determining the geographic location and / or speed of the UE by measuring a radio signal. The location information may be requested by a client (e.g. an application) related to the UE and reported to the client. In addition, the location information may be included in a core network or may be requested by a client connected to the core network. The location information may be reported in a standard format such as cell-based or geographic coordinates, and in this case, the estimation error values for the location(position) and speed of the UE and/or the positioning measurement method used for positioning may be reported together.

### Positioning Protocol configuration

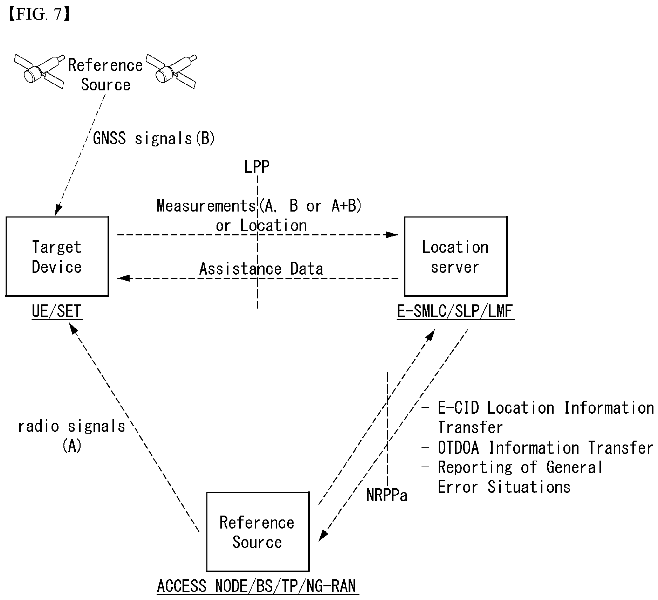

FIG. 7 is a diagram illustrating an example of a positioning protocol configuration for measuring a location of a user equipment (UE).

Referring to FIG. 7, LPP may be used as a point-to-point between a location server (E-SMLC and/or SLP and/or LMF) and a target device to position the target device (UE and/or SET) based on position-related measurements obtained from one or more reference sources. The target device and the location server may exchange measurement and/or location information based on signal A and/or signal B through the LPP.

NRPPa may be used to exchange information between the reference source (ACCESS NODE and/or BS and/or TP and/or NG-RAN nodes) and the location server.

Functions provided by the NRPPa protocol may include the following.
- E-CID Location Information Transfer: Through this function, location information may be exchanged between the reference source and the LMF for E-CID positioning purposes.
- OTDOA Information Transfer: Through this function, information may be exchanged between the reference source and the LMF for OTDOA positioning purposes.
- Reporting of General Error Situations: Through this function, a general error situation in which an error message for each function is not defined may be reported.

### PRS mapping

For positioning, a positioning reference signal (PRS) may be used. The PRS is a reference signal used for position estimation of the UE.

PRS mapping in a wireless communication system to which embodiments are applicable in the present disclosure may be performed based on Table 6 below.

**[Table 6]**

| |
|---|
| 7.2 Physical resources |
| The following antenna ports are defined for the downlink: |
| - Antenna ports starting with 5000 for positioning reference signals |
| The UE shall not assume that two antenna ports are quasi co-located with respect to any QCL type unless specified otherwise. |
| 7.4.1.7 Positioning reference signals |
| 7.4.1.7.1 General |
| A positioning frequency layer consists of one or more downlink PRS resource sets, each of which consists of one or more downlink PRS resources as described in [6, TS 38.214]. |
| 7.4.1.7.2Sequence generation |
| The UE shall assume the reference-signal sequence r(m) is defined by |
| $r \left(m\right) = \frac{1}{\sqrt{2}} \left(1-2c\left(m\right)\right) + j \frac{1}{\sqrt{2}} \left(1-2c\left(m+1\right)\right)$ |
| where the pseudo-random sequence c(i) is defined in clause 5.2.1. The pseudo-random sequence generator shall be initialised with |
| ${c}_{init} = \left({2}^{22}⌊ \frac{{n}_{ID ,seq}^{PRS}}{1024} ⌋+{2}^{10}\left({N}_{symb}^{slot}{n}_{s ,f}^{μ}+l+1\right)\left(2\left({n}_{ID ,seq}^{PRS} mod 1024\right)+1\right)+\left({n}_{ID ,seq}^{PRS} mod 1024\right)\right) mod {2}^{31}$ |
| where ${n}_{s ,f}^{μ}$ is the slot number, the downlink PRS sequence ID ${n}_{ID ,seq}^{PRS} ∈ \left\{0,1,…,4095\right\}$ is given by the higher-layer parameter DL-PRS-Sequenceld, and *l* is the OFDM symbol within the slot to which the sequence is mapped. |
| 7.4.1.7.3Mapping to physical resources in a downlink PRS resource |
| For each downlink PRS resource configured, the UE shall assume the sequence r(m) is scaled with a factor *β*_{PRS} and mapped to resources elements (*k, l*)*_{p,µ}* according to |
| ${a}_{k , l}^{\left(p, μ\right)} = {β}_{PRS} r \left(m\right)$ |
| $m = 0,1 , …$ |
| $k = {mK}_{comb}^{PRS} + \left(\left({k}_{offset}^{PRS}+k′\right) mod {K}_{comb}^{PRS}\right)$ |
| $l = {l}_{start}^{PRS} , {l}_{start}^{PRS} + 1 , … , {l}_{start}^{PRS} + {L}_{PRS} - 1$ |
| when the following conditions are fulfilled: |
| - the resource element (*k, l*)*_{p,µ}* is within the resource blocks occupied by the downlink PRS resource for which the UE is configured; |
| - the symbol *l* is not used by any SS/PBCH block used by the serving cell for downlink PRS transmitted from the serving cell or indicated by the higher-layer parameter SSB-positionInBurst for downlink PRS transmitted from a non-serving cell; |
| - the slot number satisfies the conditions in clause 7.4.1.7.4. [TS 38.211] and where |
| - ${l}_{start}^{PRS}$ is the first symbol of the downlink PRS within a slot and given by the higher-layer parameter DL-PRS-ResourceSymbolOffset; |
| - the size of the downlink PRS resource in the time domain *L*_{PRS} ∈ {2,4,6,12} is given by the higher-layer parameter DL-PRS-NumSymbols; |
| - the comb size ${K}_{comb}^{PRS} ∈ \left\{2, 4,6, 12\right\}$ is given by the higher-layer parameter transmissionComb; |
| - the resource-element offset ${k}_{offset}^{PRS} ∈ \left\{0,1,…,{K}_{comb}^{PRS}-1\right\}$ is given by the higher-layer parameter |

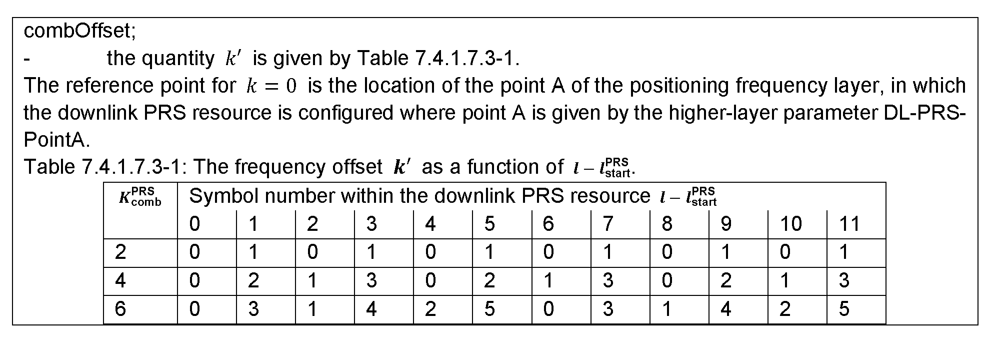

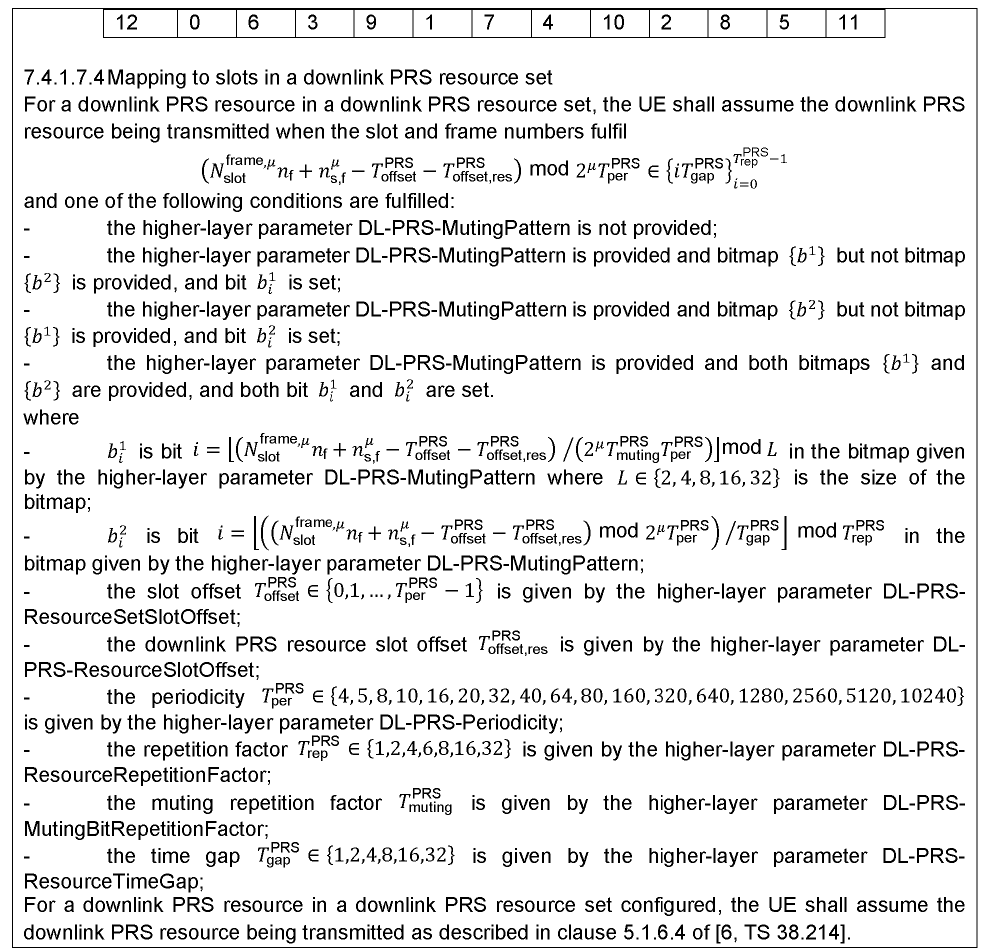

### PRS reception procedure

The PRS reception procedure of the UE in a wireless communication system to which embodiments are applicable in the present disclosure may be performed based on Table 7 below.

**[Table 7]**

| |
|---|
| 5.1.6.5 PRS reception procedure |
| The UE can be configured with one or more DL PRS resource set configuration(s) as indicated by the higher layer parameters DL-PRS-ResourceSet and DL-PRS-Resource. Each DL PRS resource set consists of K≥1 DL PRS resource(s) where each has an associated spatial transmission filter. The UE can be configured with one or more DL PRS Positioning Frequency Layer configuration(s) as indicated by the higher layer parameter DL-PRS-PositioningFrequencyLayer. A DL PRS Positioning Frequency Layer is defined as a collection of DL PRS |
| Resource Sets which have common parameters configured by DL-PRS-PositioningFrequencyLayer. |
| The UE assumes that the following parameters for each DL PRS resource(s) are configured via higher layer parameters DL-PRS-PositioningFrequencyLayer, DL-PRS-ResourceSet and DL-PRS-Resource. |
| A positioning frequency layer consists of one or more PRS resource sets and it is defined by: |
| - DL-PRS-SubcarrierSpacing defines the subcarrier spacing for the DL PRS resource. All DL PRS Resources and DL PRS Resource sets in the same DL-PRS-PositioningFrequencyLayer have the same value of DL-PRS-SubcarrierSpacing. The supported values of DL-PRS-SubcarrierSpacing are given in Table 4.2-1 of [4, TS38.211]. |
| - DL-PRS-CyclicPrefix defines the cyclic prefix for the DL PRS resource. All DL PRS Resources and DL PRS Resource sets in the same DL-PRS-PositioningFrequencyLayer have the same value of DL-PRS-CyclicPrefix. The supported values of DL-PRS-CyclicPrefix are given in Table 4.2-1 of [4, TS38.211]. |
| - DL-PRS-PointA defines the absolute frequency of the reference resource block. Its lowest subcarrier is also known as Point A. All DL PRS resources belonging to the same DL PRS Resource Set have common Point A and all DL PRS Resources sets belonging to the same DL-PRS-PositioningFrequencyLayer have a common Point A. |
| The UE expects that it will be configured with [IDs] each of which is defined such that it is associated with multiple DL PRS Resource Sets from the same cell. The UE expects that one of these [IDs] along with a DL-PRS-ResourceSetId and a DL-PRS-Resourceld can be used to uniquely identify a DL PRS Resource. |
| A PRS resource set consists of one or more PRS resources and it is defined by: |
| - DL-PRS-ResourceSetId defines the identity of the DL PRS resource set configuration. |
| - DL-PRS-Periodicity defines the DL PRS resource periodicity and takes values ${T}_{per}^{PRS} ∈ {2}^{μ} \left\{4,8, 16, 32, 64, 5, 10, 20, 40, 80, 160, 320, 640, 1280, 2560, 5120, 10240, 20480\right\}$ slots, where µ = 0,1,2,3 for DL-PRS-SubcarrierSpacing=15, 30, 60 and 120kHz respectively. ${T}_{per}^{PRS} = {2}^{μ} ⋅ 20480$ is not supported for µ = 0. All the DL PRS resources within one resource set are configured with the same periodicity. |
| - DL-PRS-ResourceRepetitionFactor defines how many times each DL-PRS resource is repeated for a single instance of the DL-PRS resource set and takes values ${T}_{rep}^{PRS} ∈ \left\{1, 2, 4, 6,8, 16, 32\right\}$,. All the DL PRS resources within one resource set have the same ResourceRepetitionFactor |
| - DL-PRS-ResourceTimeGap defines the offset in number of slots between two repeated instances of a DL PRS resource with the same DL-PRS-ResourceID within a single instance of the DL PRS resource set and takes values ${T}_{gap}^{PRS} ∈ \left\{1, 2, 4,8, 16, 32\right\}$. The UE only expects to be configured with DL-PRS-ResourceTimeGap if DL-PRS-ResourceRepetitionFactor is configured with value greater than 1. The time duration spanned by one instance of a DL-PRS-ResourceSet is not expected to exceed the configured value of DL-PRS-Periodicity. All the DL PRS resources within one resource set have the same DL-PRS-ResourceTimeGap. |
| - DL-PRS-MutingPattern defines a bitmap of the time locations where the DL PRS resource is expected to not be transmitted for a DL PRS resource set. The bitmap size can be {2, 4, 8, 16, 32} bits |

| |
|---|
| long. The bitmap has two options for applicability. In the first option each bit in the bitmap corresponds to a configurable number of consecutive instances of a DL-PRS-ResourceSet where all the DL-PRS-Resources within the set are muted for the instance that is indicated to be muted. In the second option each bit in the bitmap corresponds to a single repetition index for each of the DL-PRS-Resources within each instance of a DL-PRS-ResourceSet and the length of the bitmap is equal to DL-PRS-ResourceRepetitionFactor. Both options may be configured at the same time in which case the logical AND operation is applied to the bit maps as described in clause 7.4.1.7.4 of [4, TS 38.211]. |
| - DL-PRS-SFN0-Offset defines the time offset of the SFN0 slot 0 for the transmitting cell with respect to SFN0 slot 0 of [FFS in RAN2]. |
| - DL-PRS-ResourceSetSlotOffset defines the slot offset with respect to SFN0 slot 0 and takes values |
| ${T}_{offset}^{PRS} ∈ \left\{0,1,…,{T}_{per}^{PRS}-1\right\}$ . |
| - DL-PRS-CombSizeN defines the comb size of a DL PRS resource where the allowable values are given in Clause 7.4.1 .7.1 of [TS38.211]. All DL PRS resource sets belonging to the same positioning frequency layer have the same value of DL-PRS-combSizeN. |
| - DL-PRS-ResourceBandwidth defines the number of resource blocks configured for PRS transmission. |
| The parameter has a granularity of 4 PRBs with a minimum of 24 PRBs and a maximum of 272 PRBs. All DL PRS resources sets within a positioning frequency layer have the same value of DL-PRS-ResourceBandwidth. |
| A PRS resource is defined by: |
| - DL-PRS-ResourceList determines the DL PRS resources that are contained within one DL PRS resource set. |
| - DL-PRS-ResourceId determines the DL PRS resource configuration identity. All DL PRS resource IDs are locally defined within a DL PRS resource set. |
| - DL-PRS-SequenceId is used to initialize cinit value used in pseudo random generator [4, TS38.211, 7.4.1.7.2] for generation of DL PRS sequence for a given DL PRS resource. |
| - DL-PRS-ReOffset defines the starting RE offset of the first symbol within a DL PRS resource in frequency. The relative RE offsets of the remaining symbols within a DL PRS resource are defined based on the initial offset and the rule described in Clause 7.4.1.7.3 of [4, TS38.211]. |
| - DL-PRS-ResourceSlotOffset determines the starting slot of the DL PRS resource with respect to corresponding DL-PRS-ResourceSetSlotOffset |
| - DL-PRS-ResourceSymbolOffset determines the starting symbol of the DL PRS resource within the starting slot. |
| - DL-PRS-NumSymbols defines the number of symbols of the DL PRS resource within a slot where the allowable values are given in Clause 7.4.1.7.1 of [4, TS38.211]. |
| - DL-PRS-QCL-Info defines any quasi-colocation information of the DL PRS resource with other reference signals. The DL PRS may be configured to be 'QCL-Type-D' with a DL PRS or SS/PBCH Block from a serving cell or a non-serving cell. The DL PRS may be configured to be 'QCL-Type-C' with a SS/PBCH Block from a serving or non-serving cell. If the DL PRS is configured as both 'QCL-Type-C' and 'QCL-Type-D' with a SS/PBCH Block then the SSB index indicated should be the same. |
| - DL-PRS-StartPRB defines the starting PRB index of the DL PRS resource with respect to reference Point A. The starting PRB index has a granularity of one PRB with a minimum value of 0 and a maximum value of 2176 PRBs. All DL PRS Resource Sets belonging to the same Positioning Frequency Layer have the same value of Start PRB. |
| The UE assumes constant EPRE is used for all REs of a given DL PRS resource. |
| The UE may be indicated by the network that a DL PRS resources can be used as the reference for the RSTD measurement in a higher layer parameter DL-PRS-RstdReferenceInfo. The reference time indicated by the network to the UE can also be used by the UE to determine how to apply higher layer parameters DL-PRS-expectedRSTD and DL-PRS-expectedRSTD-uncertainty. The UE expects the |

| |
|---|
| reference time to be indicated whenever it is expected to receive the DL PRS. This reference time provided by DL-PRS-RstdReferenceInfo may include an [ID], a PRS resource set ID, and optionally a single PRS resource ID or a list of PRS resource IDs. The UE may use different DL PRS resources or a different DL PRS resource set to determine the reference time for the RSTD measurement as long as the condition that the DL PRS resources used belong to a single DL PRS resource set is met. If the UE chooses to use a different reference time than indicated by the network, then it is expected to report the DL PRS resource ID(s) or the DL PRS resource set ID used to determine the reference. |
| The UE may be configured to report quality metrics corresponding to the RSTD and UE Rx-Tx time difference |
| measurements which include the following fields: |
| - TimingMeasQuality-Value which provides the best estimate of the uncertainty of the measurement |
| - TimingMeasQuality-Resolution which specifies the resolution levels used in the Value field |
| The UE expects to be configured with higher layer parameter DL-PRS-expectedRSTD, which defines the time difference with respect to the received DL subframe timing the UE is expected to receive DL PRS, and DL-PRS-expectedRSTD-uncertainty, which defines a search window around the expectedRSTD. |
| For DL UE positioning measurement reporting in higher layer parameters DL-PRS-RstdMeasurementInfo or DL-PRS-UE-Rx-Tx-Measurementlnfo the UE can be configured to report the DL PRS resource ID(s) or the DL PRS resource set ID(s) associated with the DL PRS resource(s) or the DL PRS resource set(s) which are used in determining the UE measurements DL RSTD, UE Tx-Rx time difference or the DL PRS-RSRP. |
| The UE can be configured in higher layer parameter UE Rx-Tx Time-MeasRequestInfo to report multiple UE Rx-Tx time difference measurements corresponding to a single configured SRS resource or resource set for positioning. Each measurement corresponds to a single received DL PRS resource or resource set which can be in difference positioning frequency layers. |
| For the DL RSTD, DL PRS-RSRP, and UE Rx-Tx time difference measurements the UE can report an associated higher layer parameter Timestamp. The Timestamp can include the SFN and the slot number for a subcarrier spacing. These values correspond to the reference which is provided by DL-PRS-RSTDReferenceInfo. |
| The UE is expected to measure the DL PRS resource outside the active DL BWP or with a numerology different from the numerology of the active DL BWP if the measurement is made during a configured measurement gap. When not configured with a measurement gap, the UE is only required to measure DL PRS within the active DL BWP and with the same numerology as the active DL BWP. If the UE is not provided with a measurement gap, the UE is not expected to process DL PRS resources on serving or non-serving cells on any symbols indicated as UL by the serving cell. When the UE is expected to measure the DL PRS resource outside the active DL BWP it may request a measurement gap in higher layer parameter [XYZ]. |
| The UE assumes that for the serving cell the DL PRS is not mapped to any symbol that contains SS/PBCH. If the time frequency location of the SS/PBCH block transmissions from non-serving cells are provided to the UE then the UE also assumes that the DL PRS is not mapped to any symbol that contains the SS/PBCH block of the non-serving cell. |
| The UE may be configured to report, subject to UE capability, up to 4 DL RSTD measurements per pair of cells with each measurement between a different pair of DL PRS resources or DL PRS resource sets within the DL PRS configured for those cells. The up to 4 measurements being performed on the same pair of cells and all DL RSTD measurements in the same report use a single reference timing. |
| The UE may be configured to measure and report up to 8 DL PRS RSRP measurements on different DL PRS resources from the same cell. When the UE reports DL PRS RSRP measurements from one DL PRS resource set, the UE may indicate which DL PRS RSRP measurements have been |

| |
|---|
| performed using the same spatial domain filter for reception. |
| If the UE is configured with DL-PRS-QCL-Info and the QCL relation is between two DL PRS resources, then the UE assumes those DL PRS resources are from the same cell. If DL-PRS-QCL-Info is configured to the UE with 'QCL-Type-D' with a source DL-PRS-Resource then the DL-PRS-ResourceSetId and the DL-PRS-Resourceld of the source DL-PRS-Resource are expected to be indicated to the UE. |
| The UE does not expect to process the DL PRS in the same symbol where other DL signals and channels are transmitted to the UE when there is no measurement gap configured to the UE. |

### Positioning Architecture

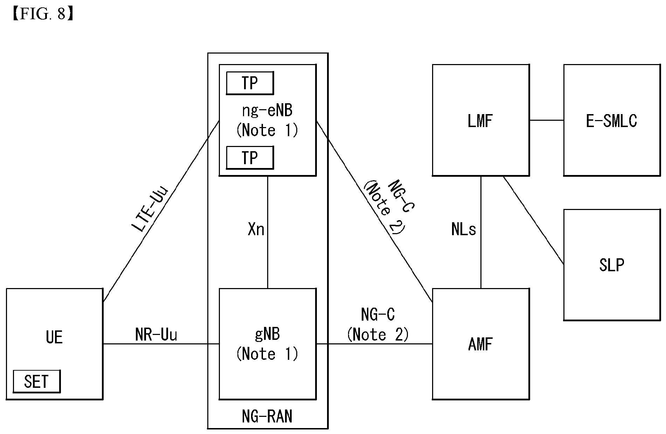

FIG. 8 is a diagram illustrating an example of architecture of a system for measuring a location of an UE.

Referring to FIG. 8, the AMF (Core Access and Mobility Management Function) may receive a request for location service related to a specific target UE from another entity such as the GMLC (Gateway Mobile Location Center), or may decide to start the location service on behalf of the specific target UE in the AMF itself. Then, the AMF transmits a location service request to the LMF (Location Management Function). The LMF receiving the location service request may process the location service request and return a processing result including the estimated location of the UE to the AMF. On the other hand, based on the location service request being received from another entity such as the GMLC other than the AMF, the AMF may transmit the processing result received from the LMF to another entity.

New generation evolved-NB (ng-eNB) and gNB may be network elements of NG-RAN that can provide measurement results for location tracking, and measure a radio signal for the target UE and transmit the result to the LMF. In addition, the ng-eNB may control some TPs (Transmission Points), such as remote radio heads, or PRS-only TPs supporting a PRS-based beacon system for E-UTRA.

The LMF may be connected to an Enhanced Serving Mobile Location Center (E-SMLC), and the E-SMLC may enable the LMF to access the E-UTRAN. For example, the E-SMLC may enable the LMF to support Observed Time Difference Of Arrival (OTDOA) which is one of the E-UTRAN positioning measurement methods, based on the downlink measurement which is obtained by the target UE through a signal transmitted from TPs dedicated for PRS in the eNB and/or E-UTRAN.

Meanwhile, the LMF may be connected to a SUPL Location Platform (SLP). The LMF may support and manage different location services for target UEs. The LMF may interact with the serving ng-eNB or serving gNB for the target UE to obtain the location measurement of the UE. For positioning of the target UE, the LMF may determine a positioning measurement method based on Location Service (LCS) client type, required QoS (Quality of Service), UE positioning capabilities, and gNB positioning capabilities and ng-eNB positioning capabilities, and apply this positioning measurement method to the serving gNB and/or the serving ng-eNB. Then, the LMF may determine a position estimate for the target UE and additional information such as accuracy of the position estimate and velocity. The SLP is a SUPL (Secure User Plane Location) entity responsible for positioning through a user plane.

The UE may measure the location of the UE by utilizing a downlink reference signal transmitted from the NG-RAN and the E-UTRAN. In this case, the downlink reference signal transmitted from the NG-RAN and the E-UTRAN to the UE may include an SS/PBCH block, CSI-RS and/or PRS, etc., and whether to measure the location of the UE using any downlink reference signal may depend on a configuration such as LMF/E-SMI,C/ng-eNB/E-UTRAN, etc. In addition, the location of the UE may be measured in a RAT-independent method using different GNSS (Global Navigation Satellite System), TBS (Terrestrial Beacon System), WLAN access points, Bluetooth beacon and a sensor (e.g. barometric pressure sensor) built into the UE. The UE may include an LCS application, and access the LCS application through communication with a network to which the UE is connected or other applications included in the UE. The LCS application may include measurement and calculation functions necessary to determine the location of the UE. For example, the UE may include an independent positioning function such as Global Positioning System (GPS), and may report the location of the UE independently of NG-RAN transmission. The independently acquired positioning information may be utilized as auxiliary information of positioning information acquired from the network.

### Position measurement procedure

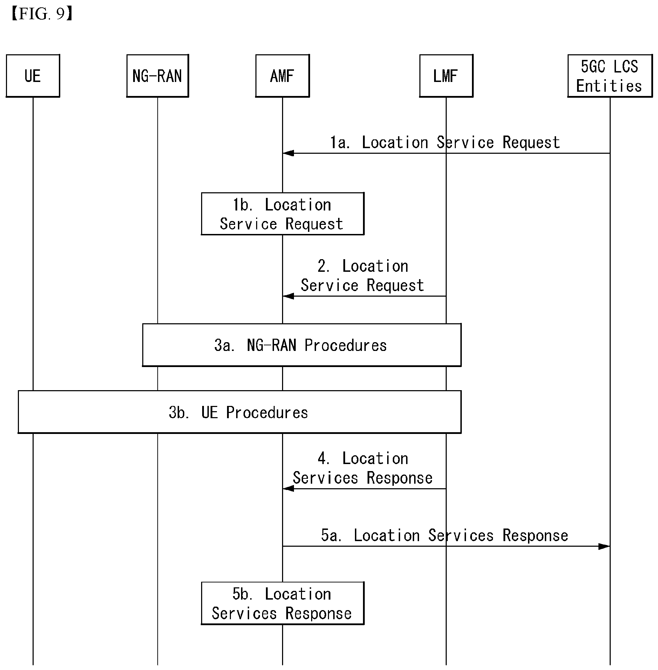

FIG. 9 is a diagram illustrating an example of a procedure for measuring a location of a UE.

When the UE is in CM-IDLE (Connection Management - IDLE) state, when the AMF receives a location service request, the AMF may establish a signaling connection with the UE, and request a network trigger service to allocate a specific serving gNB or ng-eNB. This operation process is omitted in FIG. 9. That is, in FIG. 8, it may be assumed that the UE is in a connected mode. However, the signaling connection may be released during the positioning process by the NG-RAN for reasons such as signaling and data inactivity.

Looking at the operation process of the network for measuring the location of the UE in detail with reference to FIGS. 8 and 9, in step 1a, a 5GC entity such as GMLC may request a location service for measuring the location of a target UE with a serving AMF. However, even if the GMLC does not request the location service, based on step 1b, the serving AMF may determine that the location service is necessary for measuring the location of the target UE. For example, in order to measure the location of the UE for an emergency call, the serving AMF may decide to directly perform the location service.

Then, based on step 2, the AMF may send a location service request to the LMF, and based on step 3a, the LMF may initiate location procedures for obtaining location measurement data or location measurement assistance data together with the serving ng-eNB and the serving gNB. For example, the LMF may request location-related information related to one or more UEs to the NG-RAN, and instruct the type of location information required and the associated QoS. Then, in response to the request, the NG-RAN may transmit the location-related information to the LMF. In this case, based on the method for determining the location by the request being E-CID, the NG-RAN may transmit additional location-related information to the LMF through one or more NRPPa messages. Here, 'location-related information' may mean all values used for location calculation, such as actual location estimation information and wireless measurement or location measurement, etc. In addition, the protocol used in step 3a may be an NRPPa protocol, which will be described later.

Additionally, based on step 3b, the LMF may initiate location procedures for downlink positioning with the UE. For example, the LMF may send location assistance data to the UE, or obtain a location estimate or location measurement. For example, in step 3b, a capability transfer process may be performed. Specifically, the LMF may request capability information from the UE, and the UE may transmit capability information to the LMF. In this case, the capability information may include information on a location measurement method that the LFM or UE can support, information on various aspects of a specific location measurement method, such as various types of assistance data for A-GNSS, and information on common characteristics that are not limited to any one location measurement method, such as the ability to handle multiple LPP transactions, etc. Meanwhile, in some cases, even if the LMF does not request capability information from the UE, the UE may provide capability information to the LMF.

As another example, a location assistance data transfer process may be performed in step 3b. Specifically, the UE may request location assistance data from the LMF, and may indicate required specific location assistance data to the LMF. Then, the LMF may deliver location assistance data corresponding thereto to the UE, and additionally, may transmit additional assistance data to the UE through one or more additional LPP messages. On the other hand, location assistance data transmitted from the LMF to the UE may be transmitted through a unicast method, and in some cases, the LMF may transmit location assistance data and/or additional assistance data to the UE without the UE requesting assistance data from the LMF.

As another example, a location information transfer process may be performed in step 3b. Specifically, the LMF may request the UE for location-related information related to the UE, and may indicate the type of location information required and the associated QoS. Then, in response to the request, the UE may transmit the location related information to the LMF. In this case, the UE may additionally transmit additional location-related information to the LMF through one or more LPP messages. Here, 'location-related information' may mean all values used for location calculation, such as actual location estimation information and wireless measurement or location measurement, etc, and representatively, there may be a Reference Signal Time Difference (RSTD) value measured by the UE based on downlink reference signals transmitted from a plurality of NG-RAN and/or E-UTRAN to the UE. Similar to the above, the UE may transmit the location-related information to the LMF even if there is no request from the LMF.

On the other hand, the processes made in step 3b described above may be performed independently, but may be performed continuously. In general, step 3b is performed in the order of a capability transfer process, an assistance data transfer process, and a location information transfer process, but is not limited to this order. In other words, step 3b is not limited to a specific order in order to improve the flexibility of location measurement. For example, the UE may request location assistance data at any time to perform the location measurement request already requested by the LMF. In addition, if the location information delivered by the UE does not satisfy the QoS required, the LMF may also request location information, such as location measurements or location estimates, at any time. Similarly, when the UE does not perform measurement for location estimation, the UE may transmit capability information to the LMF at any time.

In addition, when an Error occurs in the information or request exchanged between the LMF and the UE in step 3b, an Error message may be transmitted/received, and an Abort message may be transmitted/received for stopping position measurement.

On the other hand, the protocol used in step 3b may be an LPP protocol, which will be described later.

Meanwhile, step 3b may be additionally performed after step 3a is performed, or may be performed instead of step 3a.

In step 4, the LMF may provide a location service response to the AMF. In addition, the location service response may include information on whether the location estimation of the UE was successful and the location estimate of the UE. After that, if the procedure of FIG. 9 is initiated by step 1a, the AMF may deliver a location service response to a 5GC entity such as GMLC, and if the procedure of FIG. 9 is initiated by step 1b, the AMF may use a location service response to provide a location service related to an emergency call or the like.

In the protocol for location measurement described below, definitions of some terms may be based on Table 8 below.

**[Table 8]**

| |
|---|
| -NR-Uu interface: The NR-Uu interface, connecting the UE to the gNB over the air, is used as one of several transport links for the LTE Positioning Protocol for a target UE with NR access to NG-RAN. |
| - LTE-Uu interface: The LTE-Uu interface, connecting the UE to the ng-eNB over the air, is used as one of several transport links for the LTE Positioning Protocol for a target UE with LTE access to NG-RAN. |
| - NG-C interface: The NG-C interface between the gNB and the AMF and between the ng-eNB and the AMF is transparent to all UE-positioning-related procedures. It is involved in these procedures only as a transport link for the LTE Positioning Protocol. For gNB related positioning procedures, the NG-C interface transparently transports both positioning requests from the LMF to the gNB and positioning results from the gNB to the LMF. For ng-eNB related positioning procedures, the NG-C interface transparently transports both positioning requests from the LMF to the ng-eNB and positioning results from the ng-eNB to the LMF. |
| - NLs interface: The NLs interface, between the LMF and the AMF, is transparent to all UE related, gNB related and ng-eNB related positioning procedures. It is used only as a transport link for the LTE Positioning Protocols LPP and NRPPa. |

### LTE Positioning Protocol (LPP)

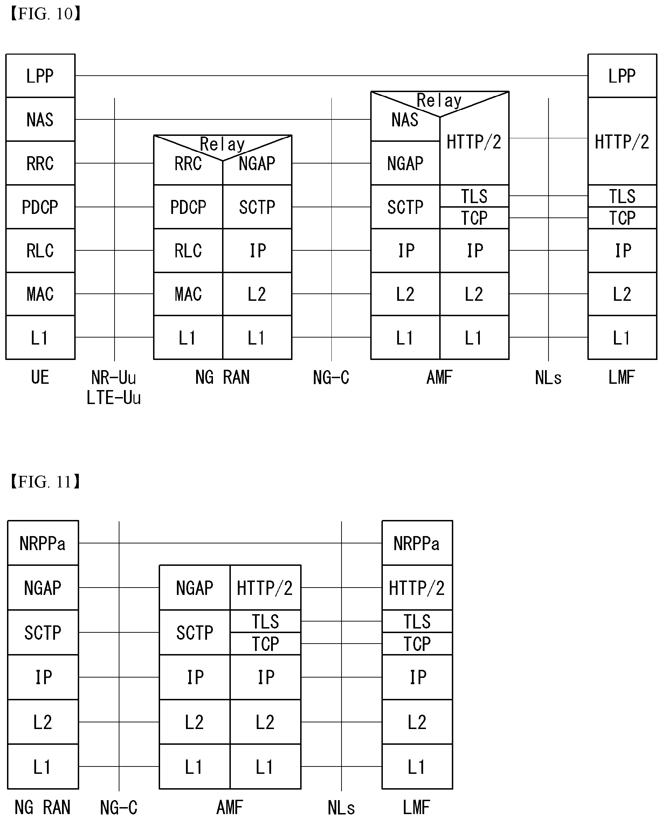

FIG. 10 is a diagram illustrating an example of a protocol layer for supporting LPP message transmission.

Referring to FIG. 10, an LPP PDU may be transmitted through a NAS PDU between the MAF and the UE. The LPP may terminate a connection between a target device (e.g. UE in the control plane or SUPL Enabled Terminal (SET) in the user plane) and a location server (e.g. LMF in the control plane or SLP in the user plane). The LPP message may be delivered in the form of a transparent PDU through an intermediate network interface using an appropriate protocol such as NGAP through the NG-C interface, NAS/RRC through the LTE-Uu and NR-Uu interfaces. The LPP protocol enables positioning for NR and LTE based on various positioning methods.

For example, the target device and the location server may exchange capability information, assistance data for positioning, and/or location information with each other through the LPP protocol. In addition, error information exchange and/or an instruction to stop the LPP procedure may be performed through the LPP message.

### LPP procedures for UE Positioning

A signal transmission/reception operation based on the LPP protocol to which the method proposed in the present disclosure can be applied may be performed based on Table 9 below.

**[Table 9]**

| |
|---|
| As described above, the protocol operates between a "target" and a "server". In the control-plane context, these entities are the UE and LMF respectively; in the SUPL context they are the SET and the SLP. A procedure may be initiated by either the target or the server. |
| 1) Capability Transfer |
| Capabilities in an LPP context refer to the ability of a target or server to support different position methods defined for LPP, different aspects of a particular position method (e.g. different types of assistance data for A-GNSS) and common features not specific to only one position method (e.g. ability to handle multiple LPP transactions). These capabilities are defined within the LPP protocol and transferred between the target and the server using LPP transport. |
| The exchange of capabilities between a target and a server may be initiated by a request or sent as "unsolicited" information. If a request is used, the server sends an LPP Request Capabilities message to the target device with a request for capability information. The target sends an LPP Provide Capabilities message. |
| Example of LPP Capability Transfer procedure |
| 1. The server may send a request for the LPP related capabilities of the target. |
| 2. The target transfers its LPP-related capabilities to the server. The capabilities may refer to particular position methods or may be common to multiple position methods. |
| LPP Capability Indication procedure is used for unsolicited capability transfer. |
| 2) Assistance data Transfer |
| Assistance data may be transferred either by request or unsolicited. In this version of the specification, assistance |
| data delivery is supported only via unicast transport from server to target. |
| Example of LPP Assistance Data Transfer procedure |
| 1. The target may send a request to the server for assistance data and may indicate the particular assistance data needed. |
| 2. The server transfers assistance data to the target. The transferred assistance data should match any assistance data requested in step 1. |
| 3. Optionally, the server may transfer additional assistance data to the target in one or more additional LPP messages. |
| LPP Assistance Data Delivery procedure is used for unilateral assistance data transfer. This procedure is unidirectional; assistance data are always delivered from the server to the target. |
| 3) Location Information Transfer |
| The term "location information" applies both to an actual position estimate and to values used in computing position (e.g., radio measurements or positioning measurements). It is delivered either in response to a request or unsolicited. |
| Example of LPP Location Information Transfer procedure |
| 1. The server may send a request for location information to the target, and may indicate the type of location information needed and associated QoS. |
| 2. In response to step 1, the target transfers location information to the server. The location information transferred should match the location information requested in step 1. |
| 3. Optionally (e.g., if requested in step 1), the target in step 2 may transfer additional location information to the server in one or more additional LPP messages. |
| LPP Location Information Delivery procedure is used for unilateral location information transfer. |

| | |
|---|---|
| Furthermore, the LPP Location Information Delivery procedure can only be piggybacked in the MO-LR request. | |
| 4) Multiple Transactions | |
| Multiple LPP transactions may be in progress simultaneously between the same target and server nodes, to improve flexibility and efficiency. However, no more than one LPP procedure between a particular pair of target and server nodes to obtain location information shall be in progress at any time for the same position method. | |
| In this example, the objective is to request location measurements from the target, and the server does not provide assistance data in advance, leaving the target to request any needed assistance data. | |
| Example of multiple LPP procedures | |
| 1. | The server sends a request to the target for positioning measurements. |
| 2. | The target sends a request for particular assistance data. |
| 3. | The server returns the assistance data requested in step 2. |
| 4. | The target obtains and returns the location information (e.g., positioning method measurements) requested in step 1. |
| 5) Error handling | |
| The procedure is used to notify the sending endpoint by the receiving endpoint that the receiving LPP message is erroneous or unexpected. This procedure is bidirectional at the LPP level; either the target or the server may take the role of either endpoint in the corresponding procedure. | |
| Example of Error handling procedure | |
| 1. | The target or server sends a LPP message to the other endpoint (i.e, "Server/Target"). |
| 2. | If the server or target ("Server/Target") detects that the receiving LPP message is erroneous or unexpected, the server or target transfers error indication information to the other endpoint ("Target/Server"). |
| 6) Abort | |
| The procedure is used to notify the other endpoint by one endpoint to abort an ongoing procedure between the two endpoints. This procedure is bidirectional at the LPP level; either the target or the server may take the role of either endpoint in the corresponding procedure. | |
| Example of Abort procedure | |
| 1. A LPP procedure is ongoing between target and server. | |
| 2. If the server or target ("Server/Target") determines that the procedure must be aborted, and then the server or target sends an LPP Abort message to the other endpoint ("Target/Server") carrying the transaction ID for the procedure. | |

### NR Positioning Protocol A (NRPPa)

FIG. 11 is a diagram illustrating an example of a protocol layer for supporting NRPPa transmission. Specifically, FIG. 11 illustrates a protocol layer for supporting transmission of an NRPPa PDU (NR Positioning Protocol a Protocol Data Unit).

The NRPPa may be used for information exchange between the NG-RAN node and the LMF. Specifically, the NRPPa may used to exchange E-CID for measurement transmitted from ng-eNB to LMF, data for supporting the OTDOA positioning method, Cell-ID and Cell location ID for the NR Cell ID positioning method, and the like. The AMF may route NRPPa PDUs based on the routing ID of the associated LMF through the NG-C interface even if there is no information on the associated NRPPa transaction.

The procedure of the NRPPa protocol for location and data collection can be divided into two types. The first type is a UE associated procedure for delivering information on a specific UE (e.g. location measurement information, etc.), and the second type is a non-UE associated procedure for delivering information applicable to an NG-RAN node and related TPs (e.g. gNB/ng-eNG/TP timing information, etc.). The two types of procedures may be supported independently or at the same time.

### NRPPa Procedure

A signal transmission/reception operation based on the NRPPa protocol to which the embodiments proposed in the present disclosure can be applied may be performed based on Table 10 below.

**[Table 10]**

| |
|---|
| Positioning and data acquisition transactions between a LMF and NG-RAN node are modelled by using procedures of the NRPPa protocol. There are two types of NRPPa procedures: |
| - UE associated procedure, i.e. transfer of information for a particular UE (e.g. positioning measurements); |
| - Non UE associated procedure, i.e. transfer of information applicable to the NG-RAN node and associated TPs (e.g. gNB/ng-eNBfTP timing information). |
| Parallel transactions between the same LMF and NG-RAN node are supported; i.e. a pair of LMF and NG-RAN node may have more than one instance of an NRPPa procedure in execution at the same time. |
| For possible extensibility, the protocol is considered to operate between a generic "access node" (e.g. ng-eNB) and a "server" (e.g. LMF). A procedure is only initiated by the server. |
| Example of a single NRPPa transaction |
| 1. Access Node sends NRPPa Procedure Request to Server. |
| 2. Server sends NRPPa Procedure Response to Acces Node. |
| N. Access Node sends NRPPa Procedure Response (end transaction) to Server. (this step may be omitted). |
| The exmaple shows a single NRPPa transaction. The transaction is terminated in step 2 in the case of a non UE associated procedure. For a UE associated procedure to gather information concerning the access node, additional responses may be allowed (e.g. sending of updated information periodically and/or whenever there is some significant change). In this case, the transaction may be ended after some additional responses. In the NRPPa protocol, the described transaction may be realized by the execution of one procedure defined as a request and a response, followed by one or several procedures initiated by the NG-RAN node (each procedure defined as a single message) to realize the additional responses. |
| An example of LPPa transaction type may be "Location Information Transfer". The term "location information" applies both to an actual position estimate and to values used in computing position (e.g., radio measurements or positioning measurements). It is delivered in response to a request. |
| Example of Location information transfer |
| 1. The server sends a request for location related information to the NG-RAN node, and indicates the type of location information needed and associated QoS. The request may refer to a particular UE. |
| 2. In response to step 1, the NG-RAN Node transfers location related information to the server. |
| The location related information transferred should match the location related information requested in step 1. |
| 3. If requested in step 1, the NG-RAN node may transfer additional location related information to the server in one or more additional NRPPa messages when the positioning method is E-CID for E-UTRA. |

In the present disclosure, a message exchanged (transmitted and received) between a UE (a target device)/location server for positioning and a configuration related to the message may be based on Table 11 below.

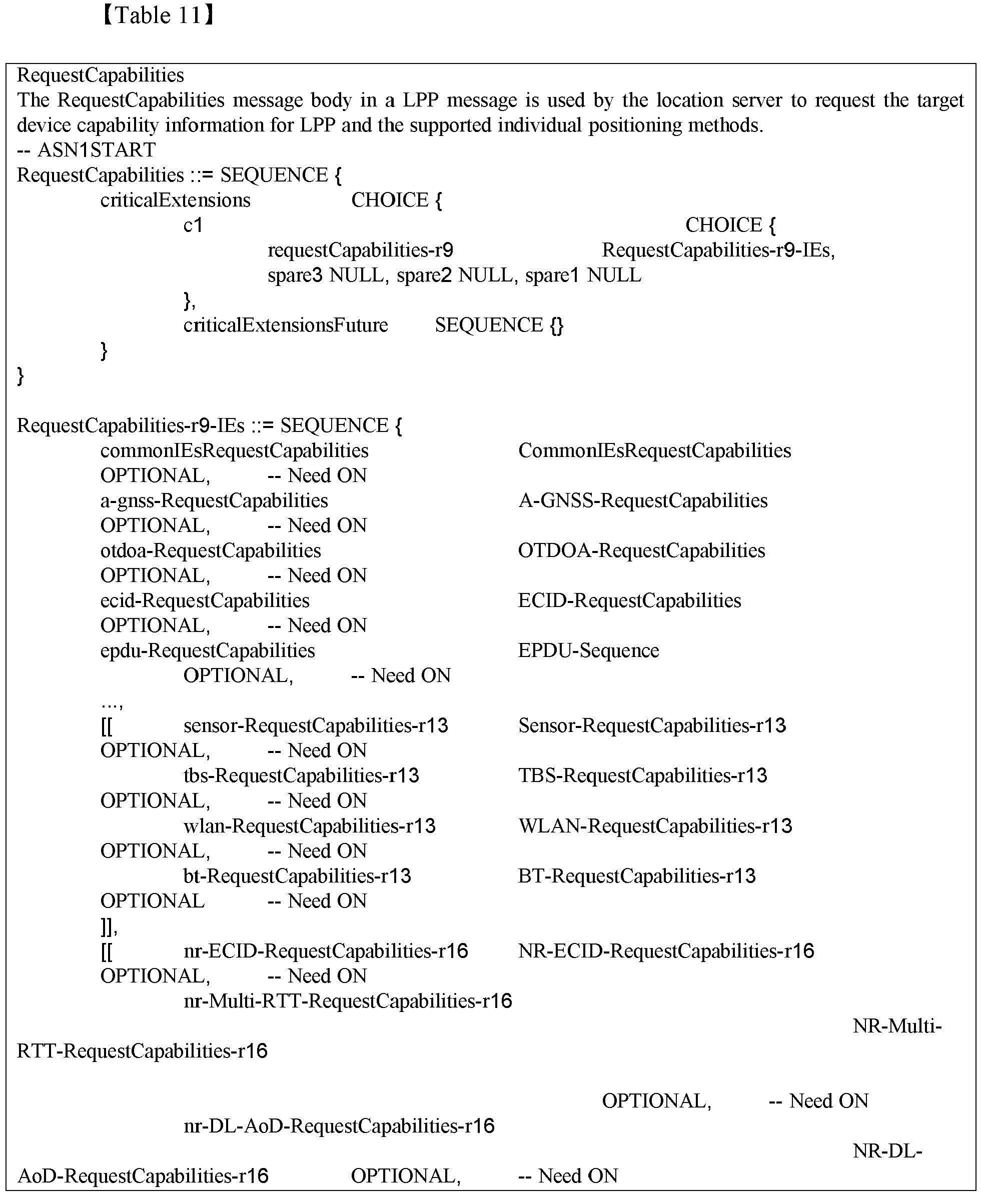

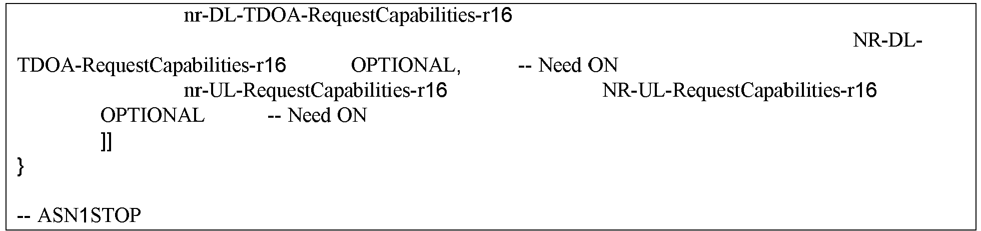

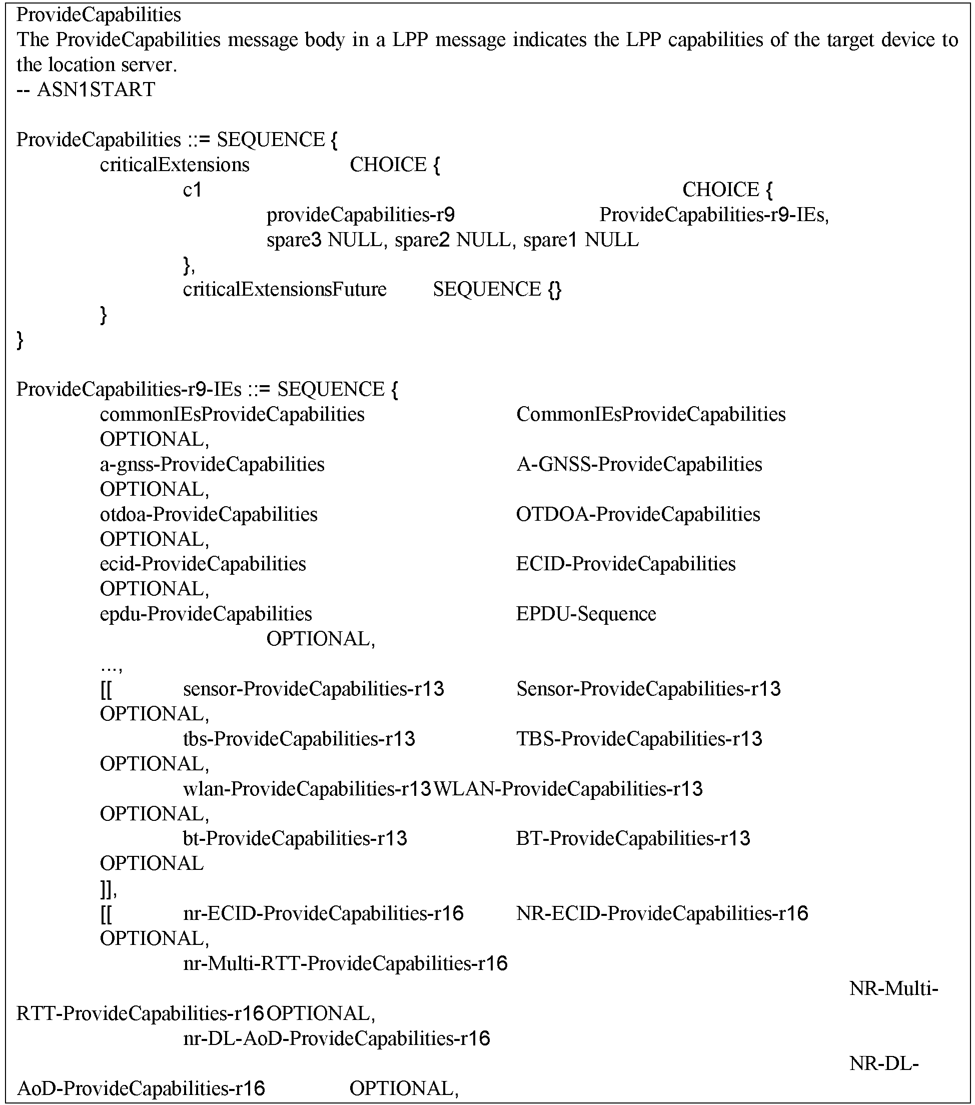

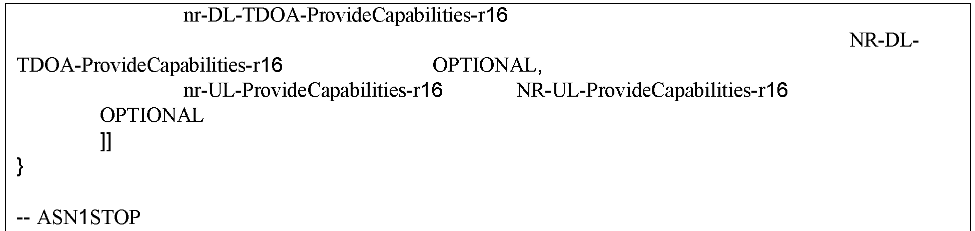

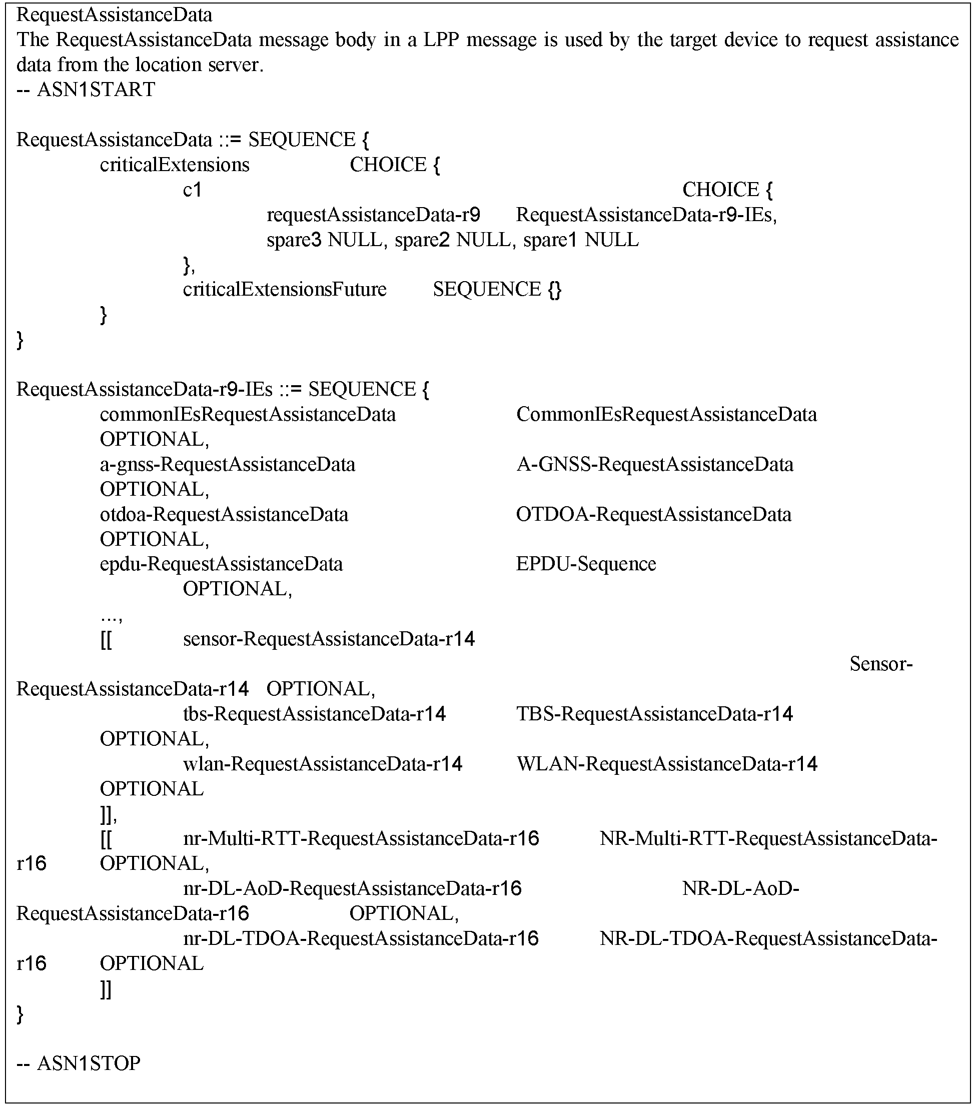

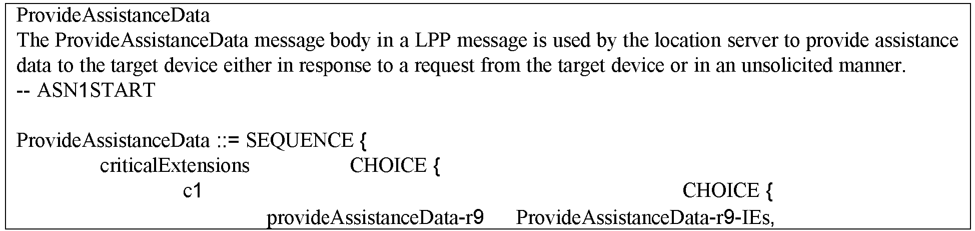

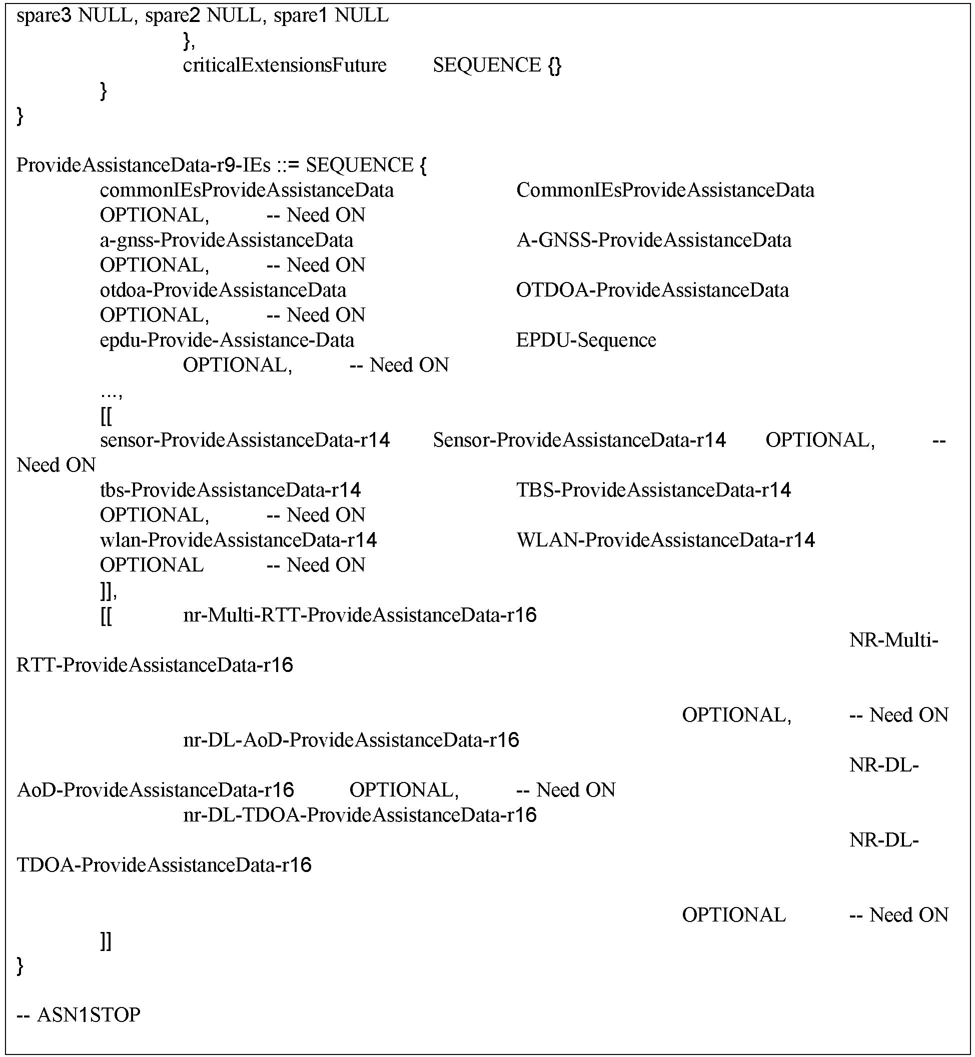

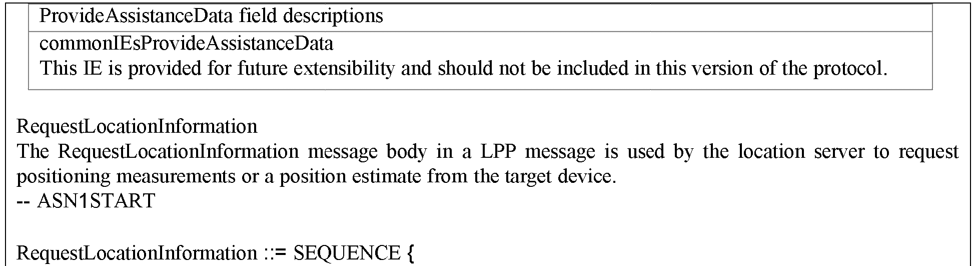

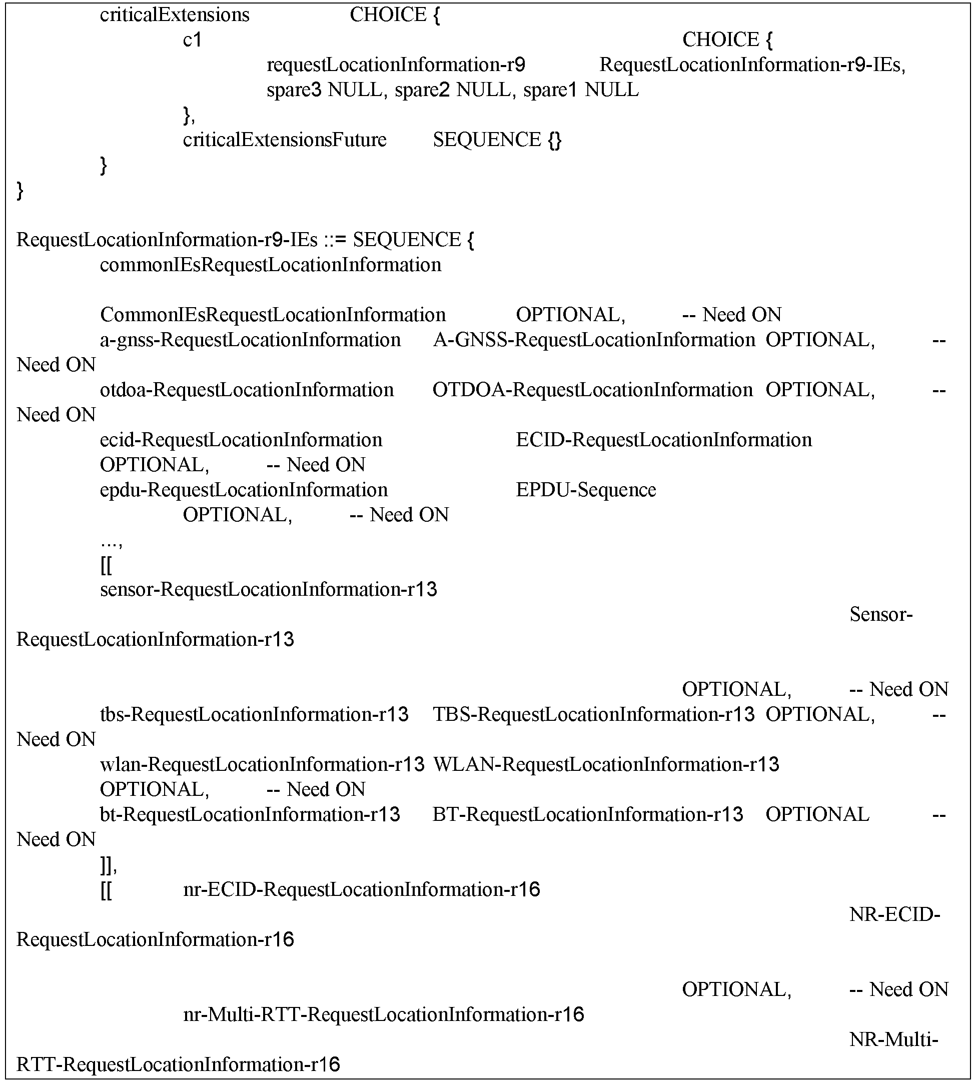

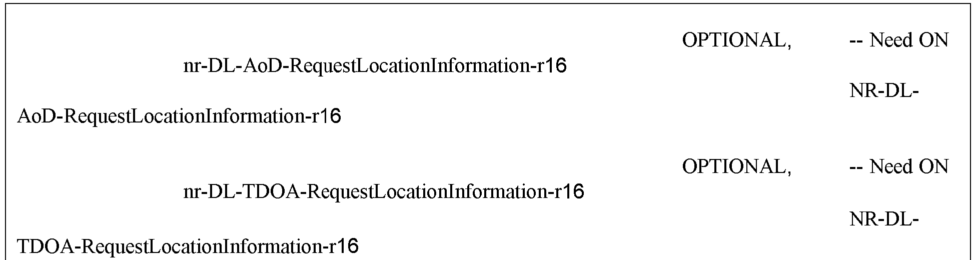

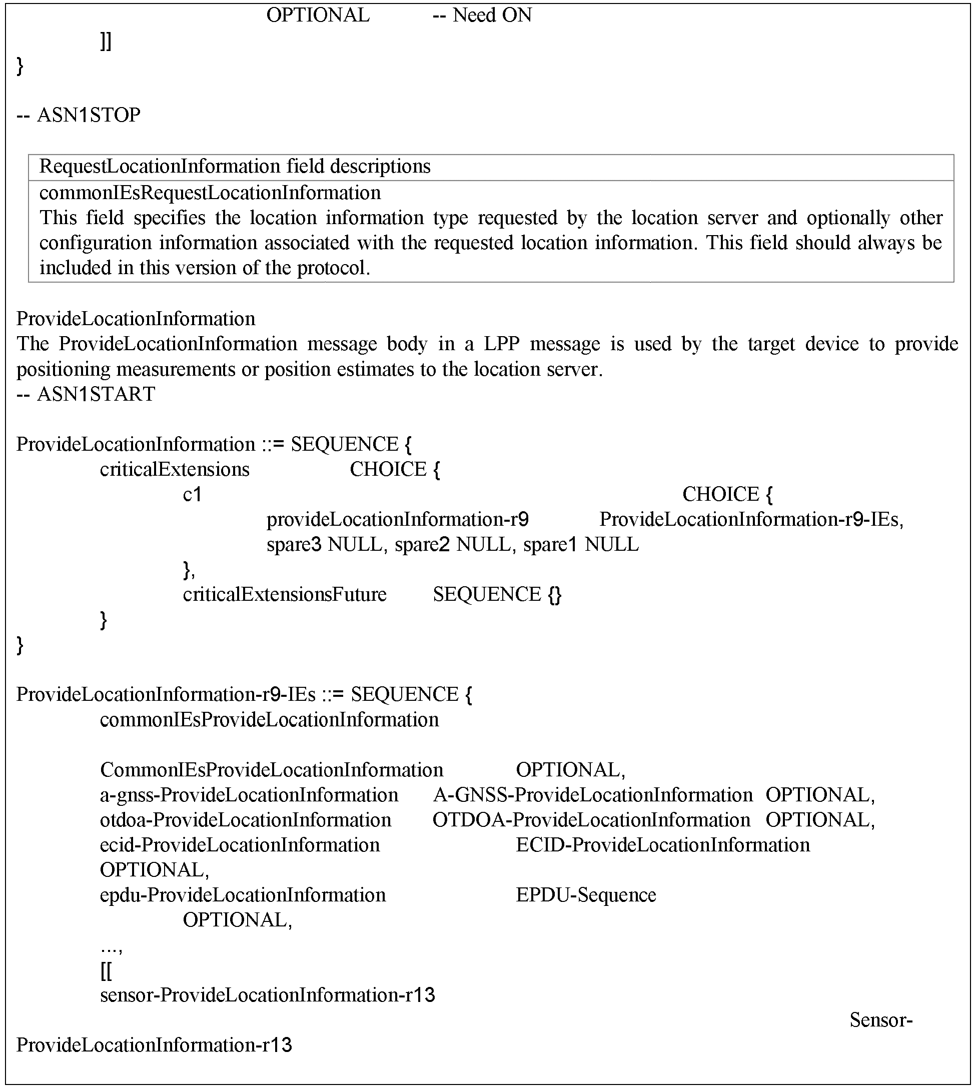

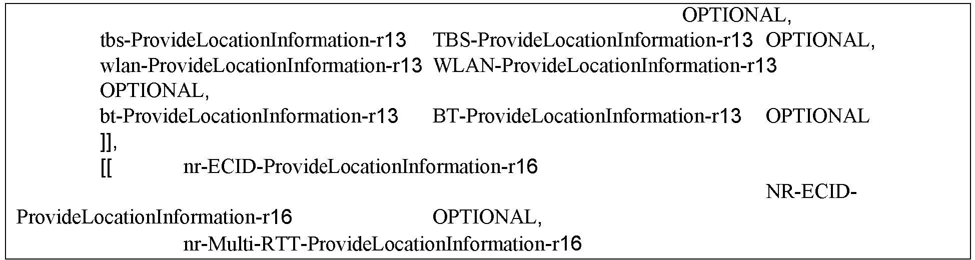

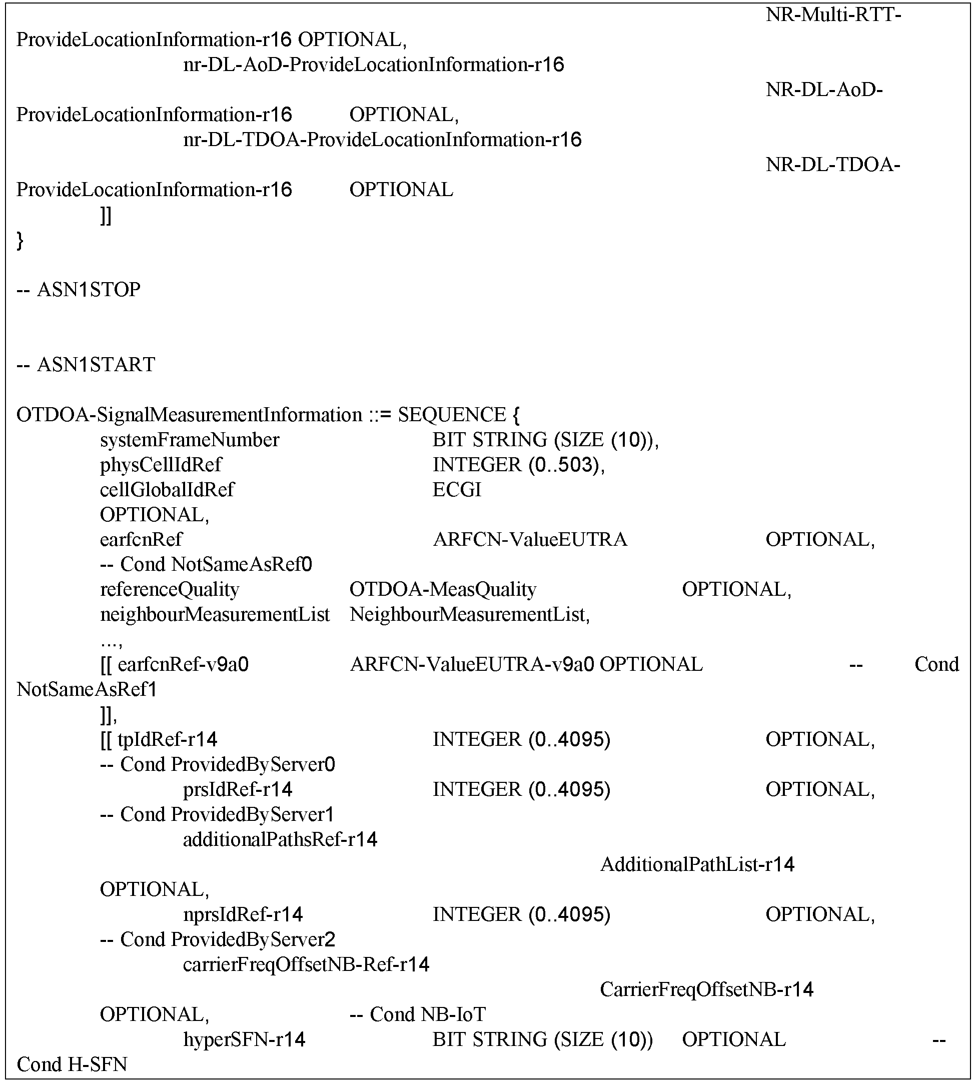

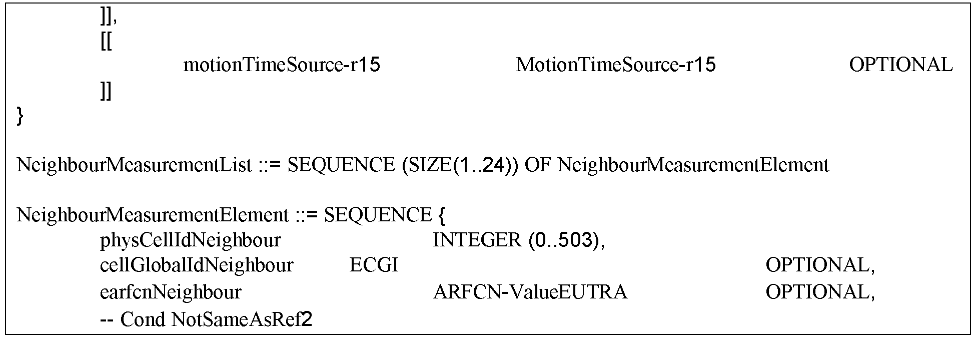

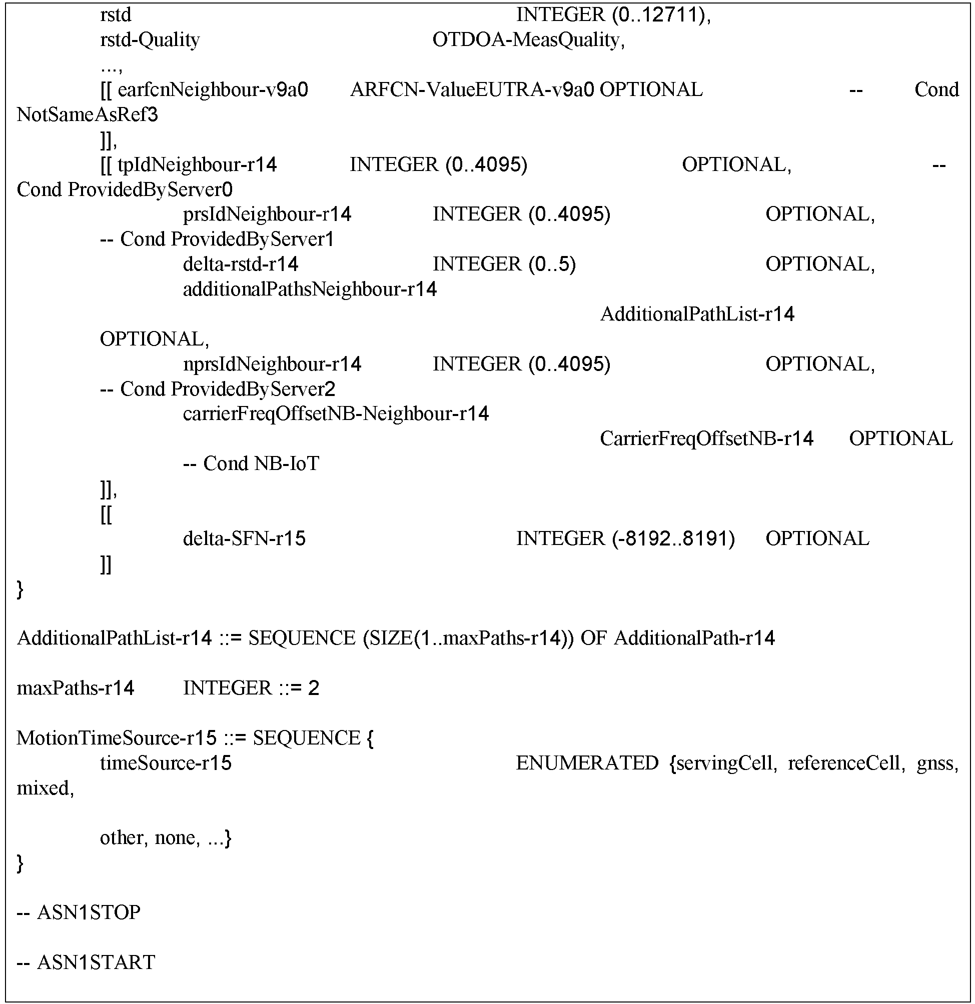

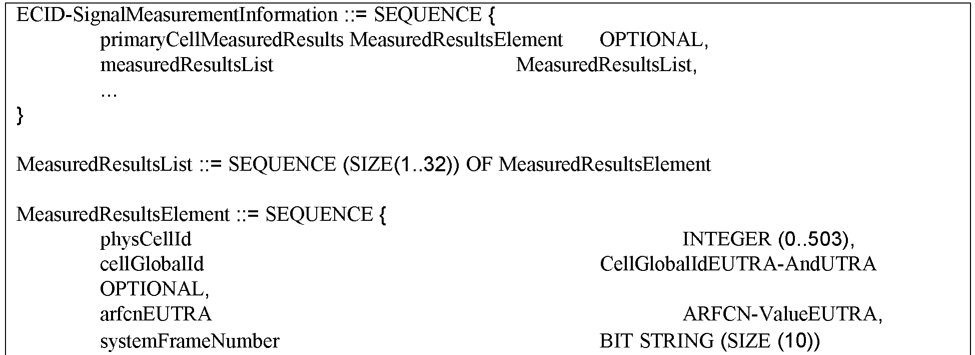

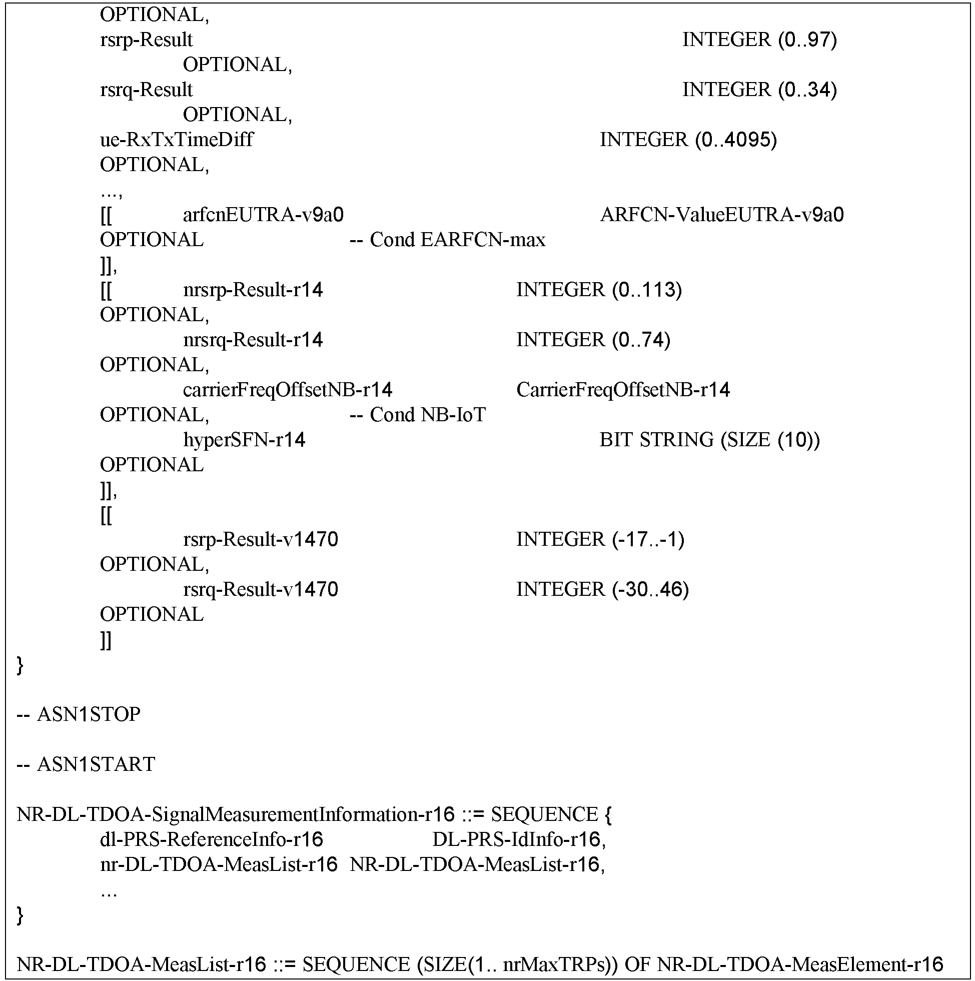

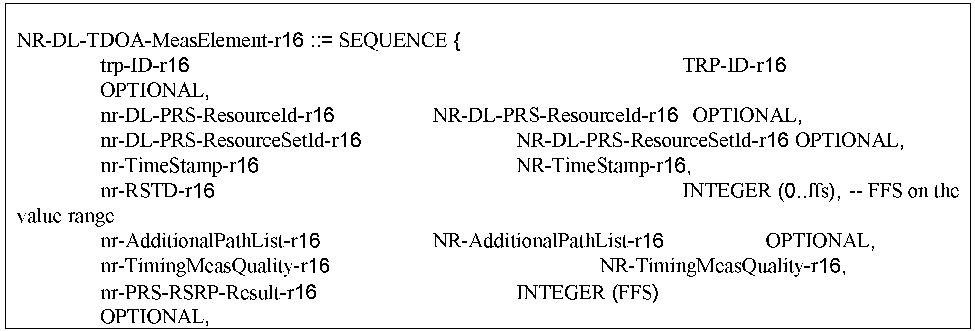

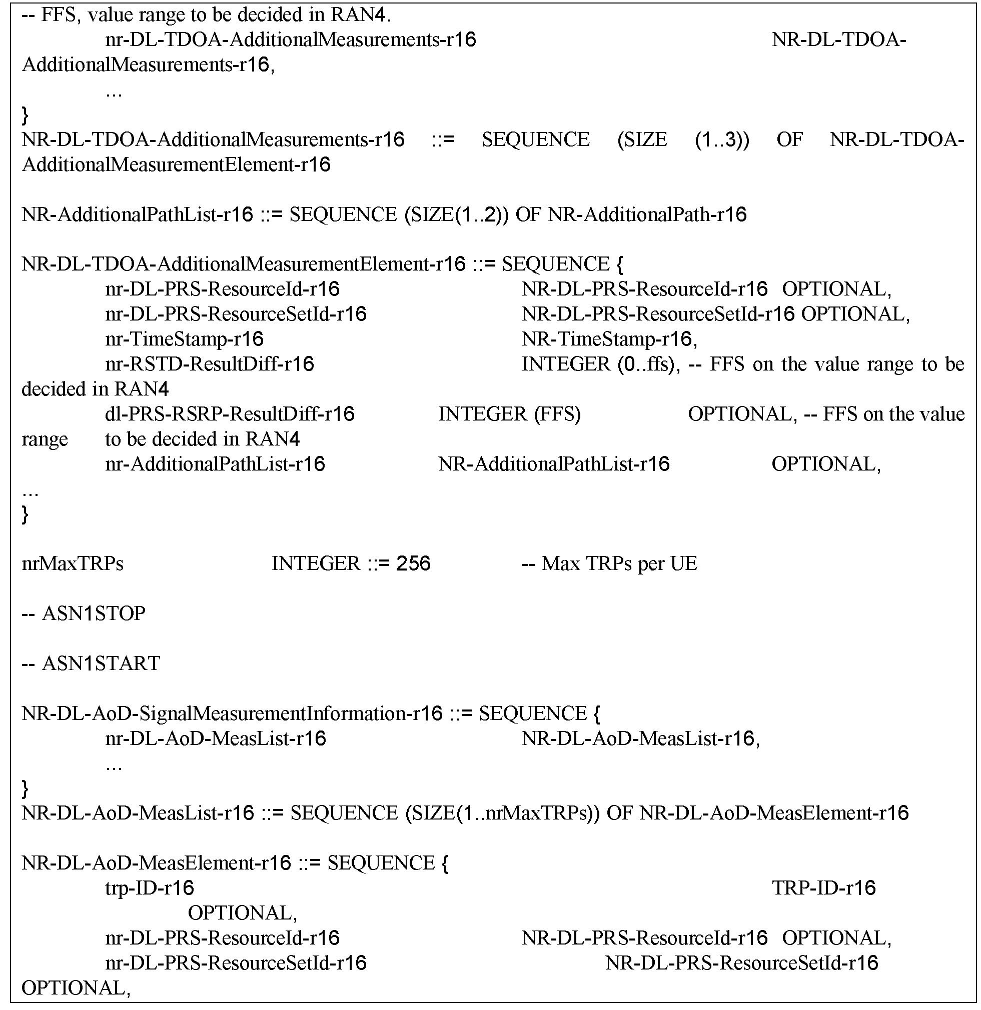

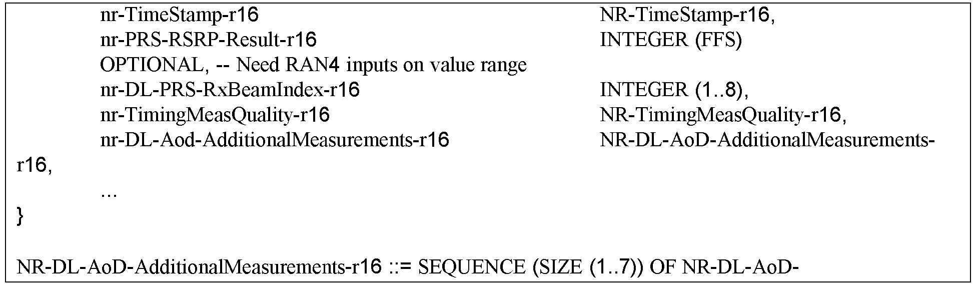

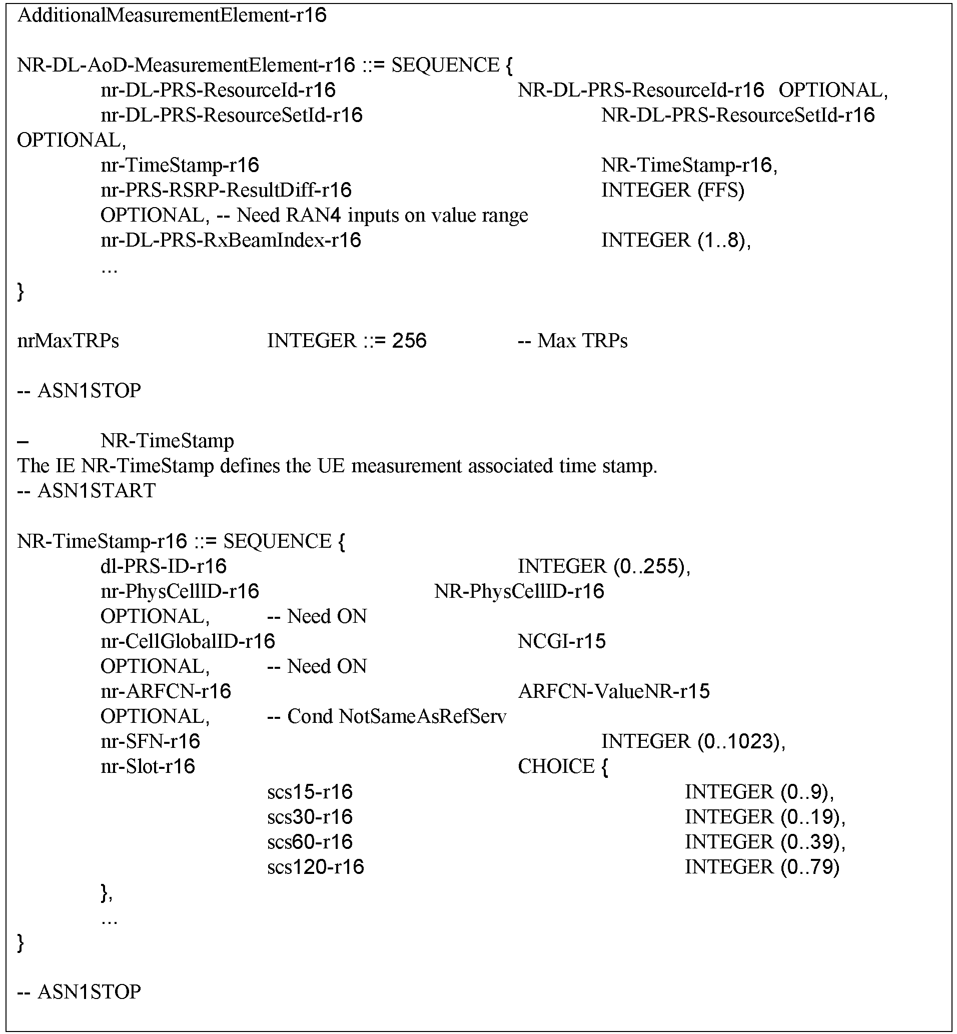

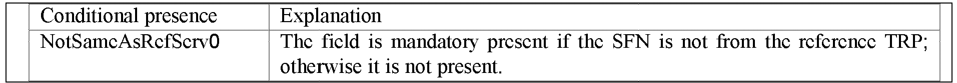

### Positioning Measurement Method

The positioning measurement methods supported by NG-RAN may include GNSS, OTDOA, E-CID (enhanced cell ID), Multi RTT (round trip time)/Multi-cell RTT, barometric pressure sensor positioning, WLAN positioning, Bluetooth positioning, and TBS (terrestrial beacon system), UTDOA (Uplink Time Difference of Arrival), etc. Among the positioning measurement methods, any one positioning measurement method may be used to measure the location of the UE, but two or more positioning measurement methods may be used to measure the location of the UE.

In the positioning measurement method described below, definitions of some terms may be based on Table 12 below.

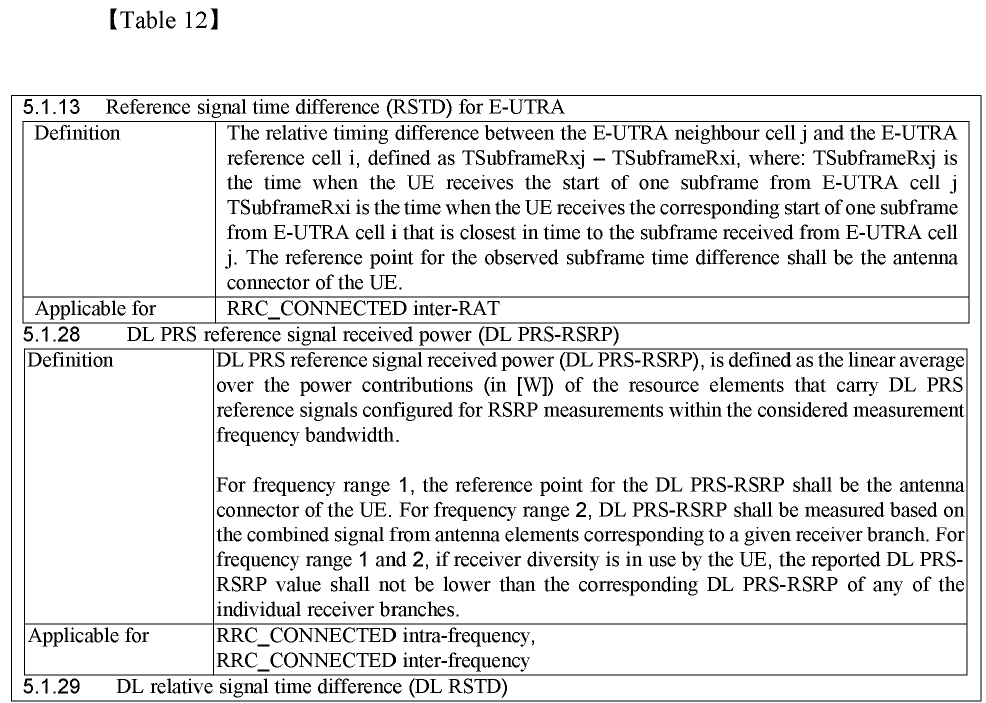

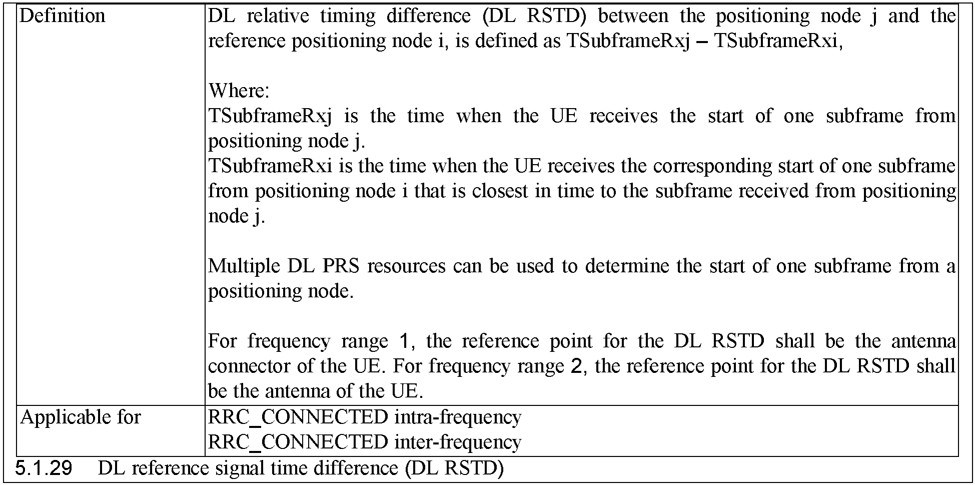

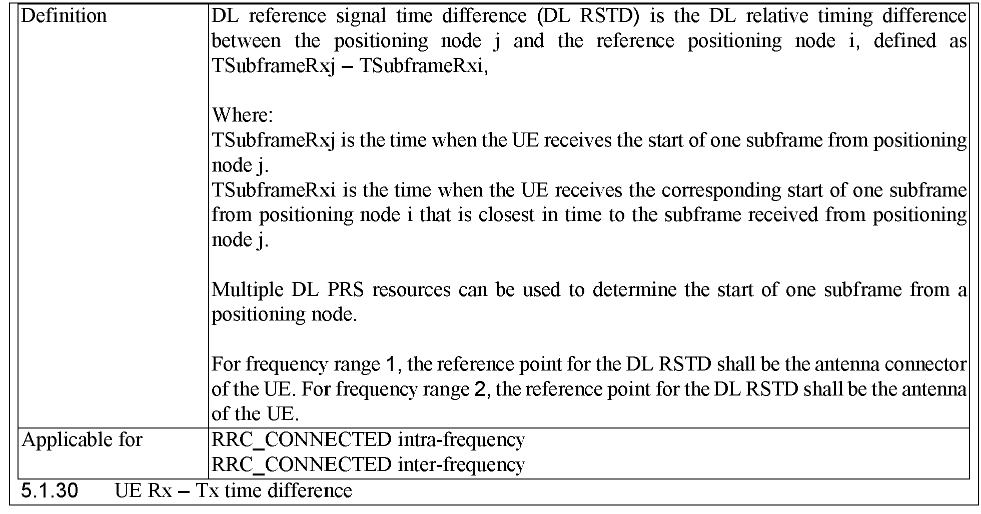

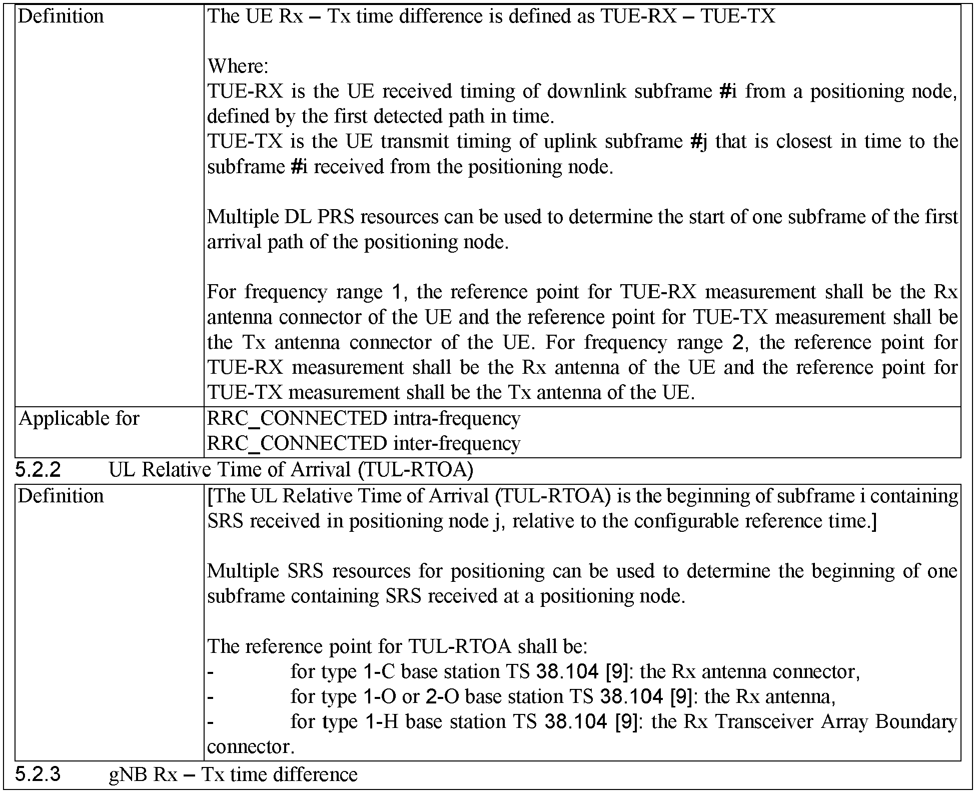

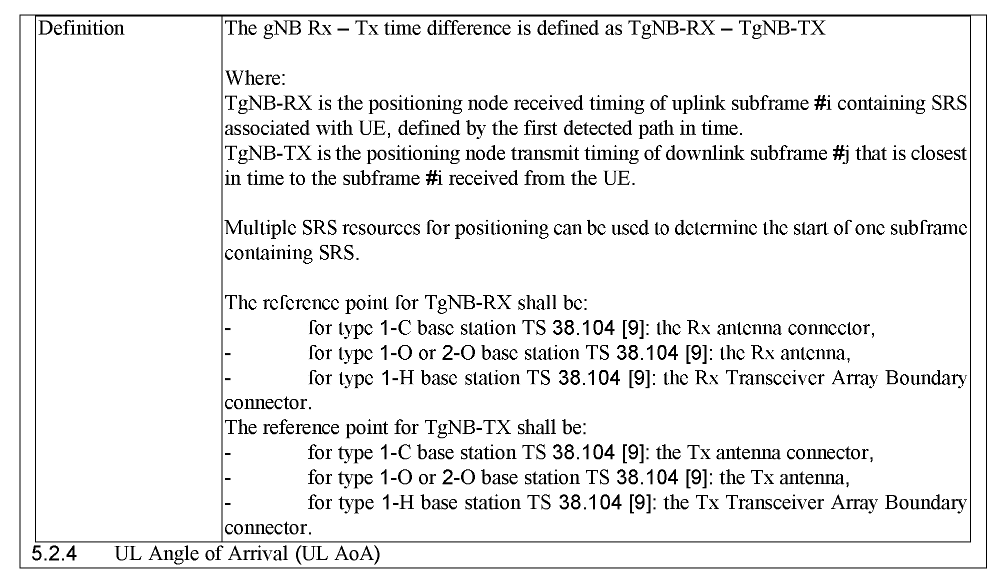

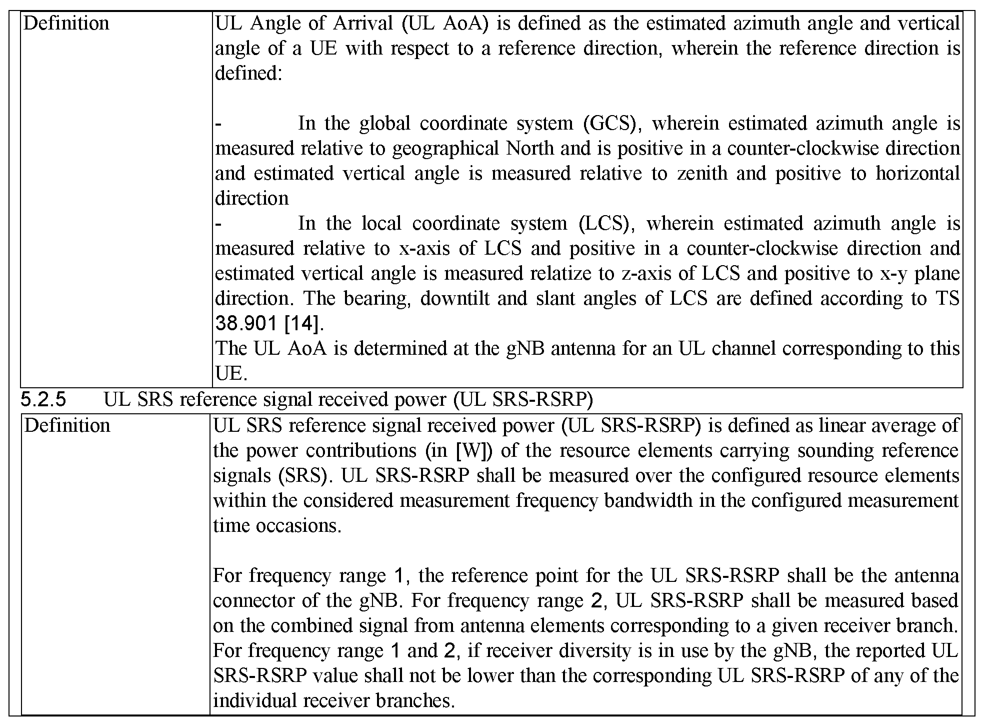

### Observed Time Difference Of Arrival (OTDOA)

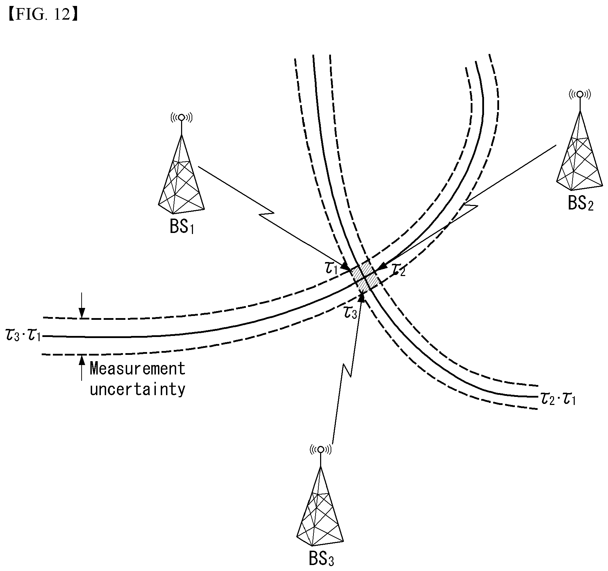

FIG. 12 is a diagram illustrating an example of an OTDOA positioning measurement method.

In the OTDOA positioning measurement method uses the measurement timing of downlink signals received by the UE from multiple TPs including an eNB, an ng-eNB, and a PRS-only TP. The UE measures the timing of the received downlink signals by using the location assistance data received from the location server. In addition, the location of the UE may be determined based on these measurement results and the geographic coordinates of the contiguous TPs.

A UE connected to the gNB may request a measurement gap for OTDOA measurement from the TP. If the UE does not recognize the SFN for at least one TP in the OTDOA assistance data, the UE may use the autonomous gap to obtain the SFN of the OTDOA reference cell before requesting the measurement gap for performing Reference Signal Time Difference (RSTD) measurement.

Here, the RSTD may be defined based on the smallest relative time difference between the boundaries of two subframes respectively received from the reference cell and the measurement cell. That is, it may be calculated based on the relative time difference between the start times of the subframes of the reference cell closest to the start time of the subframe received from the measurement cell. Meanwhile, the reference cell may be selected by the UE.

For accurate OTDOA measurement, it is necessary to measure the time of arrival (TOA) of a signal received from three or more geographically dispersed TPs or base stations. For example, the TOA for each of TP 1 , TP 2 and TP 3 may be measured, the RSTD for TP 1-TP 2, the RSTD for TP 2-TP 3, and the RSTD for TP 3-TP 1 may be calculated based on the three TOAs, a geometric hyperbola may be determined based on this, and a point where these hyperbola intersects may be estimated as the location of the UE. In this case, since accuracy and/or uncertainty for each TOA measurement may occur, the estimated location of the UE may be known as a specific range depending on the measurement uncertainty.

For example, RSTDs for two TPs may be calculated based on Equation 3 below. ${RSTD}_{i , 1} = \frac{\sqrt{{\left({x}_{t}-{x}_{i}\right)}^{2} + {\left({y}_{t}-{y}_{i}\right)}^{2}}}{c} - \frac{\sqrt{{\left({x}_{t}-{x}_{1}\right)}^{2} + {\left({y}_{t}-{y}_{1}\right)}^{2}}}{c} + \left({T}_{i}-{T}_{1}\right) + \left({n}_{i}-{n}_{1}\right)$

Here, c may be the speed of light, {xt, yt} may be the (unknown) coordinates of the target UE, {xi, yi} may be the coordinates of the (known) TP, and {25, y1} may be the coordinates of the reference TP (or other TP). Here, (Ti-T1) is a transmission time offset between two TPs, which may be referred to as "Real Time Differences" (RTDs), and ni and n1 may represent values related to UE TOA measurement errors.

### E-CID (Enhanced Cell ID)

In the cell ID (CID) positioning measurement method, the location of the UE may be measured through geographic information of the serving ng-eNB, the serving gNB and/or the serving cell of the UE. For example, geographic information of the serving ng-eNB, the serving gNB, and/or the serving cell may be obtained through paging, registration, or the like.

Meanwhile, the E-CID positioning measurement method may use additional UE measurement and/or NG-RAN radio resources and the like for improving the UE location estimate in addition to the CID positioning measurement method. In the E-CID positioning measurement method, some of the same measurement methods as those of the measurement control system of the RRC protocol may be used, but in general, additional measurement is not performed only for the location measurement of the UE. In other words, a separate measurement configuration or measurement control message may not be provided to measure the location of the UE, and the UE also does not expect that an additional measurement operation only for location measurement will be requested, and the UE may report a measurement value obtained through generally measurable measurement methods.

For example, the serving gNB may implement the E-CID positioning measurement method using the E-UTRA measurement provided from the UE.

An example of a measurement element that can be used for E-CID positioning may be as follows.
- UE measurement: E-UTRA RSRP (Reference Signal Received Power), E-UTRA RSRQ (Reference Signal Received Quality), UE E-UTRA reception-transmission time difference (Rx-Tx Time difference), GERAN / WLAN RSSI ( Reference Signal Strength Indication), UTRAN CPICH (Common Pilot Channel) RSCP (Received Signal Code Power), UTRAN CPICH Ec/Io
- E-UTRAN measurement: ng-eNB reception-transmission time difference (Rx-Tx Time difference), timing advance (Timing Advance; TADV), Angle of Arrival (AoA)

Here, TADV may be divided into Type 1 and Type 2 as follows. TADV Type 1 = (ng-eNB reception-transmission time difference) + (UE E-UTRA reception-transmission time difference)$TADV Type 2 = ng - eNB reception - transmission time difference$

On the other hand, AoA may be used to measure the direction of the UE. AoA may be defined as an estimated angle for the location of the UE in a counterclockwise direction from the base station/TP. In this case, the geographic reference direction may be north. The base station/TP may use an uplink signal such as a sounding reference signal (SRS) and/or a demodulation reference signal (DMRS) for AoA measurement. In addition, the larger the antenna array arrangement, the higher the AoA measurement accuracy, when the antenna arrays are arranged at the same interval, signals received from contiguous antenna elements may have a constant phase-rotate.

### UTDOA (Uplink Time Difference of Arrival)

UTDOA is a method of determining the location of the UE by estimating the arrival time of the SRS. When calculating the estimated SRS arrival time, the location of the UE may be estimated through the difference in arrival time with another cell (or base station/TP) by using the serving cell as a reference cell. To implement UTDOA, the E-SMLC may instruct the serving cell of the target UE to instruct the target UE to transmit SRS. In addition, the E-SMLC may provide configuration such as whether the SRS is periodic/aperiodic, bandwidth, and frequency/group/sequence hopping, etc.

### Multi RTT (Multi-cell RTT)

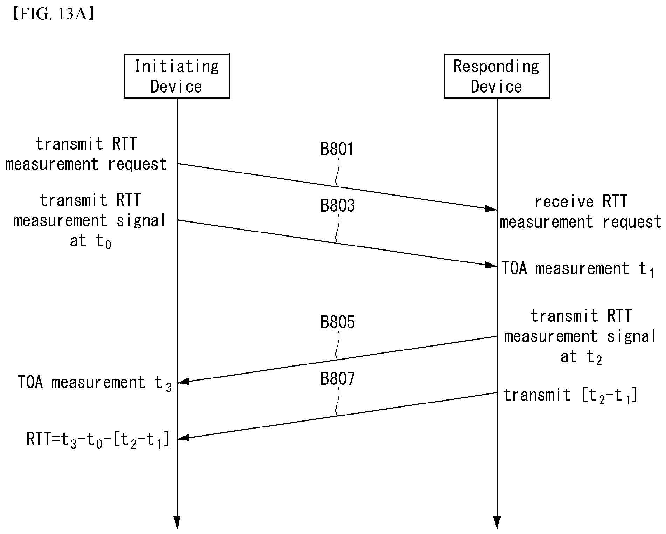

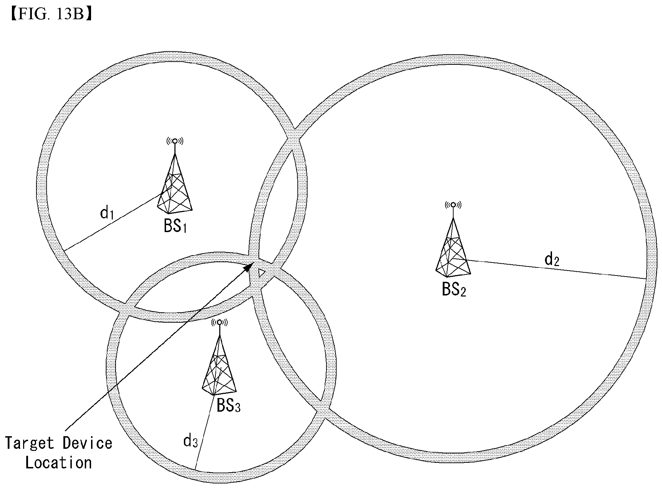

Unlike OTDOA, which requires fine synchronization (e.g. nano-second level) between TPs in the network, RTT is based on TOA measurement like the OTDOA, but requires only coarse TRP (e.g. base station) timing synchronization. Hereinafter, it will be described in detail with reference to FIGS. 13A and 13B.

FIGS. 13A and 13B are diagrams illustrating an example of a Multi RTT positioning measurement method.

Referring to FIG. 13A, an RTT process, in which TOA measurement is performed in an initiating device and a responding device, and the responding device provides the TOA measurement to the initiating device for RTT measurement (calculation), is exemplified. For example, the initiating device may be a TRP and/or a UE, and the responding device may be the UE and/or the TRP.

In operation B801 based on an exemplary embodiment, the initiating device may transmit an RTT measurement request, and the responding device may receive it.

In operation B803 based on an exemplary embodiment, the initiating device may transmit an RTT measurement signal at t0, and the responding device may acquire a TOA measurement t1.

In operation B805 based on an exemplary embodiment, the responding device may transmit the RTT measurement signal at t2, and the initiating device may acquire a TOA measurement t3.

In operation B807 based on an exemplary embodiment, the responding device may transmit information on [t2-t1], and the initiating device may receive the corresponding information and calculate the RTT based on Equation 4 below. The corresponding information may be transmitted/received based on a separate signal, or may be transmitted/received by being included in the RTT measurement signal of B805. $RTT = {t}_{3} - {t}_{0} - \left[{t}_{2}-{t}_{1}\right]$

Referring to FIG. 13B, the corresponding RTT may correspond to double-range measurement between two devices. Positioning estimation may be performed from the corresponding information, and a multilateration technique may be used. Based on the measured RTT, d1, d2, and d3 may be determined, and the target device location may be determined by the intersection of the circumference with each BS1, BS2, BS3 (or TRP) as a center and each d1, d2, and d3 as a radius.

The above-described contents (3GPP system, positioning protocol, procedure for measuring the location of the UE, positioning measurement method, etc.) may be applied in combination with methods proposed in the present disclosure be described later, or may be supplemented to clarify the technical characteristics of the methods proposed in the present disclosure. Methods to be described below are divided for convenience of description, and of course, some components of any one method may be substituted with some components of another method, or may be applied in combination with each other. That is, the various embodiments of the present disclosure described below may be combined in whole or in part to constitute other various embodiments of the present disclosure unless mutually excluded, which can be clearly understood by those of ordinary skill in the art.

Before Rel-17, when a UE reports a result of location measurement to a location server (e.g., LMF), the UE reports a reference signal received power (RSRP) which is a linear average of received strengths for resource elements (REs) in which a PRS within an indicated frequency band is transmitted. In the positioning, LoS/NLoS in a signal path between a base station (BS) and a UE is more important than a channel environment, but it is not guaranteed that a path of the corresponding signal is line of sight (LoS) even if the reported RSRP is high. This is because a signal sent by transmitting a specific material may have a weak received strength even if the signal path is the LoS.

Considering the above-described problem, in Rel-17, a report per path (e.g., a report for DL PRS RSRPP) not a report of a received signal strength on a per RE basis (e.g., a report for DL PRS RSRP) has been introduced. For example, the UE may measure and report the power of a linear average of channel responses at an i-th path (e.g., i-th path delay) of REs carrying PRS. The measurement value may be referred to as DL PRS reference signal received path power (RSRPP).

For example, the DL PRS RSRP may follow the definition described in Table 12. For example, the DL PRS RSRPP may follow the definition described in Table 13.

**[Table 13]**

| | |
|---|---|
| **Definition** | DL PRS reference signal received path power (DL PRS-RSRPP), is defined as the power of the linear average of the channel response at the i-th path delay of the resource elements that carry DL PRS signal configured for the measurement, where DL PRS-RSRPP for the 1st path delay is the power contribution corresponding to the first detected path in time. |
| | For frequency range 1, the reference point for the DL PRS-RSRPP shall be the antenna connector of the UE. For frequency range 2, DL PRS-RSRPP shall be measured based on the combined signal from antenna elements corresponding to a given receiver branch. |
| | For frequency range 1 and 2, if receiver diversity is in use by the UE for DL PRS-RSRPP measurements, the reported DL PRS-RSRPP value included in the higher layer parameter NR-*DL-AoD-MeasElement* for the first and additional measurements shall be provided for the same receiver branch(es) as applied for DL PRS-RSRP measurements. |
| **Applicable for** | RRC_CONNECTED, RRC_INACTIVE |

Referring to Table 13, DL PRS-RSRPP for a first path (or a first path delay) may be power contribution corresponding to a first detected path in time.

When the report per path is performed as described above, the following technical points may be considered.

The maximum number of paths that the UE can report based on UE's capability related to the report per path (e.g., the number of paths supported by the UE) may be defined/configured. For example, the UE may not support a path specific measurement. For example, the UE may support measurement for one path (first path) (e.g., DL PRS RSRPP measurement for the first path). For example, the UE may support measurement for two or more paths (e.g., DL PRS RSRPP measurement for the first path + DL PRS RSRPP measurement for one or more additional paths). In this instance, it may be necessary to define in detail whether measurement information for paths of the number corresponding to the UE's capability will be reported each time or measurement information for paths of the number determined within the range of the number based on the UE's capability will be reported.

When the UE reports a result of location measurement, a path specific reporting system of the UE is described in detail below. Hereinafter, a first path among paths related to path specific measurement of the UE may be referred to as a first arrival path (or first path), and additional paths other than the first path may be referred to as additional 'N' paths (or additional paths), where 'N' is the maximum number of additional paths supported by the UE and may be an integer greater than or equal to 1. For example, 'N' may be set to 4, 6 or 8.

The UE/BS may report a result of path specific measurement to a location server. The path specific measurement may be based on a timing based positioning measurement (e.g., DL-TDOA, UL-TDOA, multi-RTT) or an angle based positioning measurement (e.g., DL-AoD, LTL-AoA).

The UE may report a measurement result for the first path and one or more additional paths. The report per path may include at least one of RSRP (e.g., DL PRS-RSRPP), timing related measurement, and/or angle related measurement. For example, the UE may transmit, to the location server, an LPP message (e.g., ProvideLocationInformation message) including DL PRS-RSRPP for the first path. For example, the UE may transmit, to the location server, an LPP message (e.g., ProvideLocationInformation message) including DL PRS-RSRPP for the first path and DL PRS-RSRPP for one or more additional paths. For example, information on the DL PRS-RSRPP may be included in NR-DL-TDOA-ProvideLocationInformation or NR-Multi-RTT-ProvideLocationInformation in the LPP message based on a positioning method (e.g., DL-TDOA or Multi-RTT).

The UE may transmit information on the maximum number of measurement reports related to multiple paths when reporting capability for a measurement report to the base station or the location server (e.g., LMF). The path specific report described in the present disclosure may refer to a report including all the first arrival path (FAP) and the additional paths. In the present disclosure, unless otherwise specified, the order of first, second, third, ..., n-th arrival paths is defined in time. That is, DL PRS-RSRPP related to the first path may be related to the first detected signal in time, and the third path may be related to the third detected signal in time. When the UE reports up to the n-th path, it may mean that the UE reports the first, second, third, ..., n-th arrival paths.

### Capability report

A UE may receive a capability request from a location server (e.g., LMF) or the UE itself may report a capability for a path specific report to the location server (e.g., LMF).

For example, the UE may receive, from the location server, an LPP message (e.g., RequestCapabilities message) related to the capability request. The UE may transmit, to the location server, an LPP message (e.g., ProvideCapabilities message) including capability information requested by the location server.

For example, the UE may report the capability even if there is no request from the location server. The UE may transmit, to the location server, an LPP message (e.g., ProvideCapabilities message) including capability information that is not requested by the location server.

The LPP message related to each of the request/provision of the capability may include information (request informatopn/provision infomation) on a capability related to a positioning method. For example, the RequestCapabilities message may include nr-DL-TDOA-RequestCapabilities and/or nr-Multi-RTT-RequestCapabilities. The ProvideCapabilities message may include nr-DL-TDOA-ProvideCapabilities and/or nr-Multi-RTT-ProvideCapabilities. Besides, the RequestCapabilities message/ProvideCapabilities message may include information as defined in Table 11.

According to an embodiment, the UE may report a measurement capability for multiple paths separately for each positioning method. For example, the UE may transmit, to the location server, capability information including i) information (e.g., supportOfDL-PRS-FirstPathRSRP) indicating whether measurement for a first path is supported and/or ii) information (e.g., additionalPathsExtSupport) indicating whether measurement for additional paths is supported, for each positioning method (e.g., Multi-RTT, DL-TDOA). The additionalPathsExtSupport may indicate the number of additional paths supported by the UE (e.g., 4, 6 or 8 paths).

The capability information for each positioning method may mean NR-Multi-RTT-ProvideCapabilities and/or NR-DL-TDOA-ProvideCapabilities in the ProvideCapabilities message.

According to an embodiment, the UE may report a measurement capability for multiple paths common to the positioning method.

The capability information reported by the UE may include information related to at least one of i) whether a first arrival path can be reported, ii) whether additional paths can be reported, and/or iii) the maximum number of reports that can be reported for each path. The maximum number may be commonly applied to all reported elements, or may be indicated and configured for each element.

For example, it may be assumed that the UE can report up to four additional paths upon the capability report for DL-AoD. In addition to the RSRP (e.g., DL PRS-RSRPP), timing information, such as additionally reported RSTD or TOA or RX-Tx timing difference, may also be reported for each of the four additional paths. For another example, the UE may separately report the RSRP reported for each additional path or the maximum number for each measurement result element of timing. For example, the UE may report that i) a path specific RSRP (DL PRS-RSRPP) can be reported up to an m-th path and ii) timing measurement information as well as the path specific RSRP can be reported together up to a k-th path.

The location server (e.g., LMF) may request only specific information with respect to the information described above from the UE upon the capability request. The UE may deliver a report on the capability to a base station, and the base station may also request information on the capability of the UE from the UE. In this instance, the capability may be related to up to n path specific reports (or 1 (first path) + N (additional paths) path specific reports) supported from a UE perspective.

The UE may dividedly report TRP or resource(s) or set upon the measurement report within the reported n (or 1+N) reports. Alternatively, the UE may perform the up to n path specific reports individually supported per band or per band combination. Alternatively, the measurement report may be performed per feature set of the UEs supporting the path specific reports.

If the UE sends the capability to the location server (e.g., LMF) or the base station as described above, a problem arises as to whether the UE shall always follow the reported capability. The measurement report of the UE is described below.

### Measurement Report

### Method #1

A UE may perform measurement reporting as many as the number of reports reported to a location server based on capability information.

Only when measurement results are collected as many as the number of reports reported based on a capability, the UE may report the measurement results. In this case, a base station or the location server (e.g., LMF) does not control the number of measurement results for a path.

For example, different path specific reports may be derived by mapping the measurement results of each positioning measurement and tabulating each result value. That is, taking legacy RSRP as an example, it may be pre-configured so that only (up to) m paths are reported for -130 ≤ RSRP < -120 dBm and only (up to) n paths are reported for -120 ≤ RSRP < -110 dBm. If paths less than 'm' or 'n' within the above range are detected, m-x or n-y reports may be reported as 0 or processed as a reserved value (e.g., x<m and y<n). This has advantages of preventing reporting of unnecessary information and in terms of efficient use of resources, and the UE always performs reports as much as its capabilities.

The above-described embodiment can be extended and applied to the timing or angle measurement results. Alternatively, a report on the maximum number of additional paths based on the RSRP (i.e., RSRPP), angle and/or timing for the first arrival path may be pre-configured as above.

In addition to this, the location server (e.g., LMF) may differently pre-configure measurement results of additional paths per TRP. This is to request TRPs, which are judged to be meaningful, to report a larger number of paths and to request TRPs, which are judged to be meaningless, to report FAP or a small number of additional paths for PRS measurement, considering a distance between the UE and the TRP. As a basis for the corresponding method, the location server (e.g., LMF) may know location information of the TRP, and the location information may be obtained from 2D or 3D distance considering an approximate location of the UE (`a-priori estimation of the target device location').

In addition, the location server (e.g., LMF) or the base station may transmit, to the UE, expected RSRP (including uncertainty) information or expected path RSRP (including uncertainty) information based on the above-described embodiment. That is, the UE may perform a report on a path RSRP satisfying a power range according to an expected RSRP or an expected path RSRP. The expected RSRP or the expected path RSRP may be n dBm, and the uncertainty may limit the reporting of the report TRP or path by +- offset regarding the preceding n dBm in the range.

The above-described expected RSRP/expected path RSRP related information may be transmitted regarding the number of paths required per TRP based on system information or assistance data.

The above-described expected RSRP/expected path RSRP related information may be configured so that the same number of additional paths can be reported by grouping TRPs into groups or sets. For example, upon the PRS resource configuration, bundle information of TRPs, that refers to a bundle of contiguous TRPs and enables the same number of paths to be measured and reported for the TRPs belonging to the bundle, may be configured.

### Method #2

A location server (e.g., LMF) may transmit information related to a path specific report through a measurement result request message, and a UE may perform measurement/reporting on the indicated/set number of paths. For example, the location server may transmit, to the UE, information indicating a request for measurement and reporting for a first path. In this case, the UE may report only a measurement result for the first path to the location server. For example, the location server may transmit, to the UE, information indicating a request for measurement and reporting for the first path and information indicating a request for measurement and reporting for additional path(s). In this case, the UE may report measurement results for the first path and the additional path(s) to the location server. The number (e.g., 4, 6 or 8) of the additional path(s) may be based on capability information of the UE transmitted to the location server as described above.

According to the present embodiment, the location server (e.g., LMF) may indicate/configure to the UE based on a reported capability so that the number of paths based on the capability or a smaller number of path(s) are measured/reported. The UE may perform measurement and reporting based on the indicated/configured number and contents.

For example, path specific related information same as the maximum number of paths to be reported may be included in a request message for location information transmitted from the location server (e.g., LMF) to the UE, and the UE may always perform the reporting as many as the indicated/configured number. For example, the location server may indicate whether measurement information for the first path is required based on information (e.g., nr-RequestedMeasurements) in an LPP message (e.g., RequestLocationInformation message). For example, the location server may indicate to provide measurement information related to additional paths based on information (e.g., additionalPaths) in the LPP message (e.g., RequestLocationInformation message). The measurement information related to the additional paths may be defined in nr-AdditionalPathList. The nr-AdditionalPathList may include measurement information (e.g., DL PRS RSRPP) for each path of paths based on the number supported by the UE. Specifically, if additionalPaths is configured with `requested', the UE may include measurement information (e.g., DL PRS-RSRPP) for paths of the number (e.g., 4, 6 or 8) based on the capability in the nr-AdditionalPathList and report it.

In this instance, the maximum number of paths to be reported may be indicated/configured per positioning method (e.g., indicated/configured for each of DL-TDOA and multi-RTT), or commonly indicated/configured regardless of the positioning method. For example, 1) for the DL-TDOA method, only the measurement for the first path may be indicated and the measurement for the additional paths may not be indicated, and 2) for the multi-RTT method, the measurement for the first path and the additional paths may be indicated.

The location server (e.g., LMF) may differently configure and request a measurement result element to be reported for each path. For example, when the location server (e.g., LMF) requests the measurement result from the UE through the DL-TDOA method (i.e., when the location server sends the UE the LPP message requesting the measurement result related to the DL-TDOA method), a request (LPP message) of the location server may indicate the UE to report measurement results as in the following 1) and 2).
1) Report RSTD and RSRP up to an n (< M)-th path
2) Report only RSTD result from a (n+1)-th path

Here, M is the maximum number of reportable additional paths (e.g., the number N of additional paths supported by the UE other than the first path) transmitted through a capability report from the UE. The above-described operation (i.e., the reporting operation of the UE according to the 1) and 2)) takes into account that the measurement results for paths that lag behind a first arrival path only cause signaling overhead of the UE and may not be used in terms of the location server (e.g., LMF).

The present embodiment can be applied to the operation for measurement result requests for all the positioning methods. For example, the present embodiment can be applied to an operation (operation of the location server) for a measurement result request for the DL-AoD method and a UE operation based on the request.

### Method #3

When a location server (e.g., LMF) sends a measurement result request, the location server may indicate/set the number of paths for which a measurement result is requested. A UE may report measurement information for paths within a range of the number indicated/set by the location server. That is, the UE may fluidly determine the number of paths related to the report of the measurement information within a range of the number indicated/set by the location server.

For the method #1 and the method #2, the UE obtains measurement results as many as the indicated/set number and then reports them to the location server (e.g., LMF).

In the present embodiment, the number of paths may be delivered from the location server (e.g., LMF) through a request for a path specific report, but the number of paths related to measurement information reported by the UE is determined by the UE within the range indicated/set by the location server. The UE may report measurement information for an FAP or a plurality of paths within the indicated/set number. That is, the UE reports measurement information for paths according to the indicated number and may skip a report of (path related to) a measurement result that is judged to be unnecessary.

In addition, the UE reports together RSTD and measurement quality related to RSTD measurement upon the timing measurement reporting. However, since reporting of a result with poor quality results in resource consumption for unnecessary transmission, the UE may differentially perform a path specific report depending on the quality of the measurement. In this regard, a base station or the location server (e.g., LMF) may transmit information such as a threshold to the UE so that it can report a result higher than a specific quality, and the UE may determine/select measurement information of path(s) to be reported based on the threshold. For example, the UE may report a measurement value with quality beyond the set/indicated threshold. For example, the UE may report a measurement value with quality within a range based on the set/indicated threshold (e.g., threshold 1 <= quality of path <= threshold 2, or threshold 1 < quality of path < threshold 2).

The following embodiments may be considered in common with the above-described methods.

When the UE reports a path specific RSRP (DL PRS RSRPP), the UE may transmit together associated timing information (RSTD or UE Rx-Tx timing difference or TOA) to the location server. In this case, the associated timing information may be defined as a value related to detection timing of a path based on a reference resource. For example, if the timing information is a positive number, it may mean that the path is detected later in time than a path detected based on the reference resource (timing of the path is later than timing of the path based on the reference resource). For example, if the timing information is a negative number, it may mean that the path is detected earlier in time than a path detected based on the reference resource (timing of the path is earlier than timing of the path based on the reference resource). For example, the timing information may be nr-RelativeTimeDifference in the nr-AdditionalPathList described above.

A measurement quality for each path may be reported together with the timing-related information described above. The UE may selectively report paths beyond a specific measurement quality. Information related to this may be indicated/configured/transmitted from the base station or the location server (e.g., LMF) to the UE. For example, the measurement quality information may be nr-PathQuality(NR-TimingQuality) in the nr-AdditionalPathList described above. NR-TimingQuality may include information on a best estimate of the quality of the detected timing of the additional path and resolution information related to the estimate (e.g., 0.1, 1, 10, 30 metre (meter), etc.).

In another method, the location server (e.g., LMF) or the base station may transmit a specific offset (minimum threshold) to the UE based on a first path RSRP, and the UE may perform reports on only paths beyond the path RSRP. Hence, when the path RSRP becomes a normalization form of RSRP that refers to the average power of REs in which PRS is currently transmitted, the location server (e.g., LMF) may learn an expected value of RSRP from an approximate location of the UE and may also calculate an expected value of a first path from the expected value of the RSRP. The expected path RSRP and the uncertainty described above may be helpful in selecting the first arrival path, and an additionally given offset value may be used as the minimum threshold of the path RSRP. The UE may report only paths with a path RSRP greater than the minimum threshold.

The expected path RSRP and the expected RSRP described above may be transmitted together. The expected path RSRP and the expected RSRP may be combined with an expected RSTD and may be used for NLos/NoL detection. The expected path RSRP and the expected RSRP may also be used to set the number of paths at the UE side with respect to an additional path report.

Based on the fact that the LMF uses a-priori estimate of a target device location for providing the expected RSTD, since the location server (e.g., LMF) can know information on a location of the TRP, the location server may calculate an approximate RSRP by considering a distance between the UE and the base station.

Further, the path RSRP measurement may be normalized with PRS RSRP, and the RSRP predicted by the location server (e.g., LMF) is a result obtained under the LoS assumption, and thus has a high probability of being the first arrival path. Putting this together, the following operations/embodiments may be considered.

The location server may transmit, to the UE, the expected path RSRP (including uncertainty) as well as the expected RSRP (including uncertainty) for the selection of the first arrival path, and the UE may determine a path with a value similar to the corresponding value as the first arrival path.

Since the location server (e.g., LMF) can know a-priori estimate of the target device location and information on the location of the TRP, the location server may calculate an approximate RSRP by considering a distance between the UE and the base station. The expected RSRP is a result obtained under the LoS assumption between the UE and the base station, and thus has a high probability of being the first arrival path. The location server may provide, to the UE, information on the expected RSRP (including uncertainty) and the expected path RSRP (including uncertainty) so as to report the first arrival path of the UE.

It is necessary to clarify whether the UE should always report a plurality of first arrival paths for a single TRP as many as the maximum number reported in the capability report. This is because reporting a poor measurement result (e.g., measurement result that is very unlikely to be utilized by the location server) only increases overhead. Therefore, similar to reporting of timing quality in timing based positioning, it needs to be configured/indicated to report only FAP beyond a specific measurement path RSRP quality.

Having the UE report measurement results for all the first arrival paths (i.e., all the measurement values for the first path) according to the capability only increases overhead if the first arrival path with poor reception capability is included. Considering this, the UE may report only the FAP beyond a specific path RSRP quality. For example, the location server may configure/indicate a report related to a specific path RSRP quality to the UE.

One more uncertainty window described above may be designated separately. This is used to determine a report on the additional paths. The UE may report, to the location server (e.g., LMF), measurement only for the path specific RSRP that exists in the uncertainty.

The UE may distinguish LoS/NLoS by combining at least one of the following 1) to 3).
1) Expected RSRP
2) Expected path RSRP
3) Uncertainty information for each of the 1) and the 2)

For example, if values of each element in a combination consisting of at least one of the 1) to 3) satisfy values of a predefined combination, it may be determined as the LoS. For example, the degree (LoS likelihood) to which values of each element in a combination consisting of at least one of the 1) to 3) are similar to values of a predefined combination may be quantified, mapped to values between 0 and 1, and transmitted.

All methods and contents described in the present disclosure can be equally applied to the base station, and thus information on the request can be transmitted from the base station to the UE. All information described above can be used in any method.

The methods and rules described in the present disclosure can also be applied when the measurement results are reported from the base station to the location server (e.g., LMF).

The methods and rules described in the present disclosure can be applied to all the positioning methods of all DL/UL/DL+UL, and SRS related to the positioning methods may include not only SRS for the positioning but also SRS for MIMO.

The methods and rules described in the present disclosure can be extended and applied to AI/ML.

The methods and rules described in the present disclosure can be applied to regardless of RRC connected/idle/inactive.

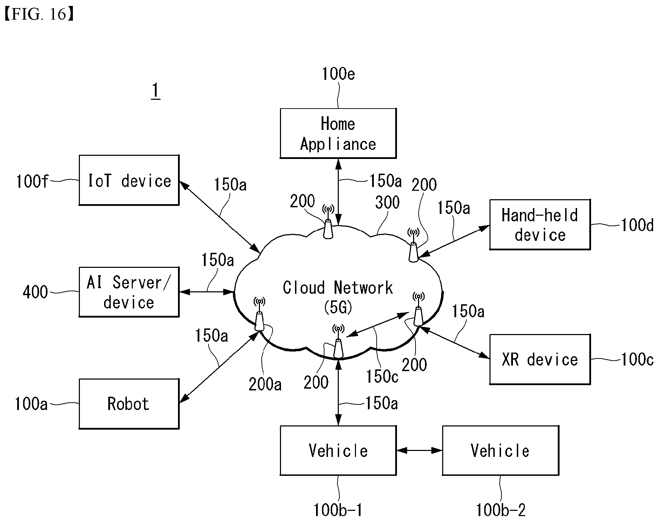

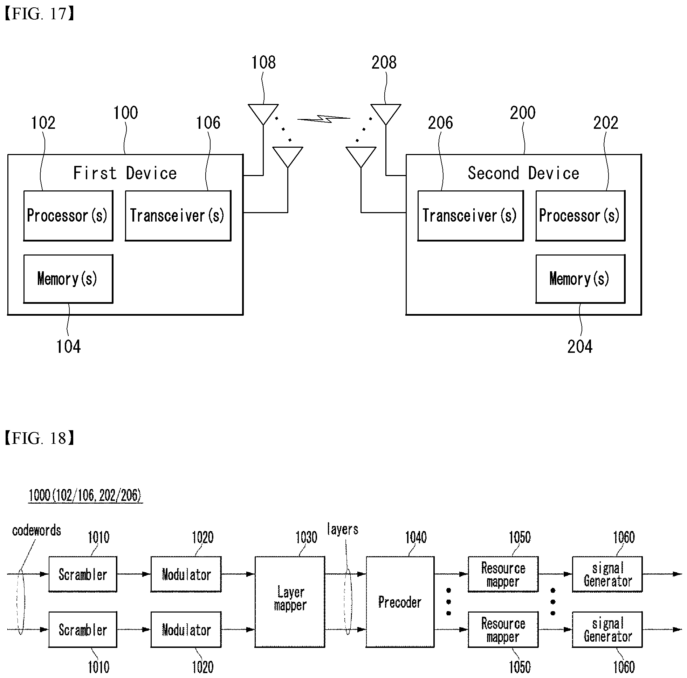

From an implementation perspective, operations (e.g., operations related to the path specific measurement/reporting) of the UE/BS/location sever according to the above-described embodiments can be processed by a device (e.g., processors 102 and 202 of FIG. 17) of FIGS. 16 to 20 to be described later.

Further, operations (e.g., operations related to the path specific measurement/reporting) of the UE/BS/location sever according to the above-described embodiments can be stored in a memory (e.g., memories 104 and 204 of FIG. 17) in the form of commands/programs (e.g., instructions, executable codes) for running at least one processor (e.g., processors 102 and 202 of FIG. 17).

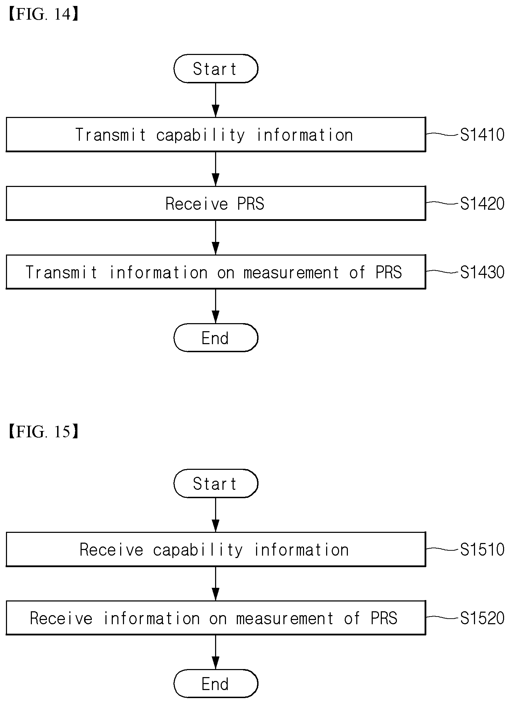

Below, the above-described embodiments are described in detail from a UE operation perspective with reference to FIG. 14. Methods to be described below are merely distinguished for convenience of explanation. Thus, as long as the methods are not mutually exclusive, it is obvious that partial configuration of any method can be substituted or combined with partial configuration of another method.

FIG. 14 is a flowchart illustrating a method for a UE to transmit information on measurement of PRS in a wireless communication system according to an embodiment of the present disclosure.

Referring to FIG. 14, a method for a UE to transmit information on measurement of a positioning reference signal (PRS) in a wireless communication system according to an embodiment of the present disclosure may include a capability information transmitting step S1410, a PRS receiving step S1420, and a step S1430 of transmitting the information on the measurement of the PRS.

In the step S1410, the UE transmits a message including capability information to a location server. The capability information may include information related to a positioning method supported by the UE. For example, the UE, a base station, and the location server may mean the target device, the reference source, and the location server of FIG. 7, respectively.

According to an embodiment, the positioning method may be i) a downlink-time difference of arrival (DL-TDOA) positioning method or ii) a multi-round trip time (RTT) positioning method, but is not limited thereto. As described above, a path specific measurement/report may be performed for other positioning methods in addition to the DL TDOA/multi-RTT positioning methods.

According to an embodiment, the message including the capability information may be transmitted based on an LTE positioning protocol (LPP) procedure (e.g., Procedures related to capability transfer). For example, the message including the capability information may be an LPP message (ProvideCapabilities message).

According to an embodiment, the capability information may include i) information representing whether to support a measurement for a first path related to the PRS and/or ii) information representing whether to support a measurement for at least one additional path related to the PRS. In this instance, the information representing whether to support the measurement for the at least one additional path related to the PRS may indicate the number (e.g., 4, 6 or 8) of additional paths supported by the UE. The present embodiment may be based on embodiments related to the capability report described above.

For example, the capability information may be defined for each positioning method. Specifically, the capability information may include capability information related to the DL TDOA (e.g., nr-DL-TDOA-ProvideCapabilities) and/or capability information related to the multi-RTT (e.g., nr-Multi-RTT-ProvideCapabilities).

As a specific example, the capability information (e.g., nr-DL-TDOA-ProvideCapabilities, nr-Multi-RTT-ProvideCapabilities) for each positioning method may include i) information (e.g., supportOfDL-PRS-FirstPathRSRP) representing whether to support a measurement for a first path related to the PRS and/or ii) information (e.g., additionalPathsExtSupport) representing whether to support a measurement for at least one additional path related to the PRS. The supportOfDL-PRS-FirstPathRSRP may be information (or field) indicating whether a target device supports DL PRS RSRPP of a first path measurement for the positioning method (e.g., DL-TDOA/Multi-RTT).

The additionalPathsExtSupport may be information (or field) indicating that the target device supports nr-AdditionalPathListExt. The additionalPathsExtSupport may indicate the number (e.g., 4, 6 or 8) of additional paths supported by the target device. In this instance, the nr-AdditionalPathListExt provides information for the additional paths related to the PRS. For example, if the number of additional paths supported by the UE is 4, the nr-AdditionalPathListExt may include information for each of the four paths. The information for each of the four paths may include i) timing information (e.g., nr-RelativeTimeDifference), ii) quality information (e.g., nr-PathQuality) and/or iii) DL PRS RSRPP.

The timing information (e.g., nr-RelativeTimeDifference) may be defined as a value related to detection timing of a path based on a reference resource. For example, if the timing information is a positive number, it may mean that the path is detected later in time than a path detected based on the reference resource (timing of the path is later than timing of the path based on the reference resource). For example, if the timing information is a negative number, it may mean that the path is detected earlier in time than a path detected based on the reference resource (timing of the path is earlier than timing of the path based on the reference resource).

The quality information (e.g., nr-PathQuality) may include information on a best estimate of the quality of the detected timing of the additional path and resolution information related to the estimate (e.g., 0.1, 1, 10, 30 metre (meter), etc.).

According to the step S1410, an operation of the UE (100/200 of FIGS. 16 to 20) to transmit the message including the capability information to the location server (100/200 of FIGS. 16 to 20) may be implemented by a device of FIGS. 16 to 20. For example, referring to FIG. 17, one or more processors 102 may control one or more transceivers 106 and/or one or more memories 104 so as to transmit the message including the capability information to the location server 200.

In the step S1420, the UE receives the PRS from the base station. For example, the base station may be based on the reference source of FIG. 7, and the PRS may be based on the radio signals of FIG. 7. The reception of the PRS may be performed as defined in Tables 6 and 7 above.

According to the step S1420, an operation of the UE (100/200 of FIGS. 16 to 20) to receive the PRS from the base station (100/200 of FIGS. 16 to 20) may be implemented by the device of FIGS. 16 to 20. For example, referring to FIG. 17, one or more processors 102 may control one or more transceivers 106 and/or one or more memories 104 so as to receive the PRS from the base station 200.

In the step S1430, the UE transmits the information on the measurement of the PRS to the location server.

The transmission of the information on the measurement of the PRS may be performed as defined in Table 7 above. For example, the information on the measurement of the PRS may include a reference signal time difference (RSTD) related to the PRS and/or a reference signal received power (RSRP) related to the PRS.

According to an embodiment, a message including the information on the measurement of the PRS may be transmitted based on an LTE positioning protocol (LPP) procedure (e.g., procedures related to location information transfer). For example, the message including the information on the measurement of the PRS may be an LPP message (ProvideLocationInformation message).

According to an embodiment, the information on the measurement of the PRS may include a DL PRS reference signal received path power (RSRPP) for one or more paths related to the PRS. The DL PRS RSRPP may follow the definition of Table 13. The one or more paths related to the PRS may be paths based on a capability of the UE. For example, the one or more paths related to the PRS may include the first path. For example, the one or more paths related to the PRS may include the first path and the at least one additional path (e.g., 4, 6 or 8 additional paths).

According to an embodiment, the information on the measurement of the PRS may include i) timing information related to each path of the at least one additional path and ii) information representing a quality related to each path of the at least one additional path. The timing information means the above-described timing information (e.g., nr-RelativeTimeDifference), and the information representing the quality means the above-described quality information (e.g., nr-PathQuality).

According to an embodiment, based on the one or more paths related to the PRS including the first path and the at least one additional path, the DL PRS RSRPP related to the at least one additional path may be greater than a minimum threshold determined based on a DL PRS RSRPP related to the first path and a preset offset. The following effects can be derived through the present embodiment. When performing measurement and reporting operations for the additional paths, meaningful values in determining LoS/NLoS can be reported to the location server.

According to an embodiment, only DL PRS RSRPP determined based on the above-described expected path RSRP (i.e., expected RSRPP) and uncertainty information related to it (range information related to the expected RSRPP) among the DL PRS RSRPPs measured by the UE may be reported. The present embodiment may be based on the method #1 of the measurement report described above. This is described in detail below.

For example, the DL PRS RSRPP included in the information on the measurement of the PRS may be based on a DL PRS RSRPP with a value within a pre-defined range among DL PRS RSRPPs measured for the one or more paths related to the PRS. The pre-defined range may be determined based on an expected value related to the DL PRS RSRPP and range information (uncertainty) related to the expected value. The expected value related to the DL PRS RSRPP and the range information related to the expected value may be configured by the location server or the base station.

For example, the UE may receive, from the location server, configuration information including the expected value related to the DL PRS RSRPP and the range information related to the expected value. In this instance, the configuration information may be based on the LPP message (e.g., ProvideAssistanceData). The operation of receiving the configuration information may be performed before the step S1410 or before the step S1420.

For example, the UE may receive, from the base station, system information including the expected value related to the DL PRS RSRPP and the range information related to the expected value. The operation of receiving the system information may be performed before the step S1410 or before the step S1420.

According to the step S1430, an operation of the UE (100/200 of FIGS. 16 to 20) to transmit the information on the measurement of the PRS to the location server (100/200 of FIGS. 16 to 20) may be implemented by the device of FIGS. 16 to 20. For example, referring to FIG. 17, one or more processors 102 may control one or more transceivers 106 and/or one or more memories 104 so as to transmit the information on the measurement of the PRS to the location server 200.

The method may further include a step of receiving a message including request information for the measurement of the PRS. Specifically, in this step, the UE may receive, from the location server, the message including the request information for the measurement of the PRS. This step may be performed before the step S1420 or the step S1430.

According to an embodiment, the request information for the measurement of the PRS may include i) information indicating a provision of measurement for the first path and/or ii) information indicating a provision of measurement for the at least one additional path. For example, the message including the request information for the measurement of the PRS may be the LPP message (e.g., RequestLocationInformation message). The request information for the measurement of the PRS may include request information for each positioning method. For example, the request information for the measurement of the PRS may include request information related to the multi-RTT (e.g., NR-Multi-RTT-RequestLocationInformation) and/or request information related to the DL-TDOA (e.g., NR-DL-TDOA-RequestLocationInformation). The request information related to each positioning method may include i) information (e.g., nr-RequestedMeasurements) indicating a provision of measurement for the first path and/or ii) information (e.g., additionalPathsExt and/or additionalPathsDL-PRS-RSRP-Request) indicating a provision of measurement for the at least one additional path. For example, if a value of a second bit (e.g., firstPathRsrpReq-r17) of the nr-RequestedMeasurements is set to 1, it may mean that the provision of measurement for the first path is requested.

For example, the additionalPathsExt may indicate that the target device has been requested to provide measurement information (e.g., nr-AdditionalPathListExt) related to the above-described additional path. The additionalPathsDL-PRS-RSRP-Request may indicate that the target device has been requested to provide DL PRS RSRPP for the additional path in the nr-AdditionalPathListExt.

The method may further include a step of receiving a message including request information for the capability information. Specifically, in this step, the UE receives, from the location server, the message including the request information for the capability information. This step may be performed before the step S1410.

Below, the above-described embodiments are described in detail from a perspective of an operation of a location server with reference to FIG. 15. Methods to be described below are merely distinguished for convenience of explanation. Thus, as long as the methods are not mutually exclusive, it is obvious that partial configuration of any method can be substituted or combined with partial configuration of another method.

FIG. 15 is a flowchart illustrating a method for a location server to receive information on measurement of PRS in a wireless communication system according to another embodiment of the present disclosure.

Referring to FIG. 15, a method for a location server to receive information on measurement of a positioning reference signal (PRS) in a wireless communication system according to another embodiment of the present disclosure may include a capability information receiving step S1510 and a step S 1520 of receiving information on the measurement of the PRS.

In the step S 1510, the location server receives a message including capability information from a UE. The capability information may include information related to a positioning method supported by the UE. For example, the UE, a base station, and the location server may mean the target device, the reference source, and the location server of FIG. 7, respectively.

According to an embodiment, the positioning method may be i) a downlink-time difference of arrival (DL-TDOA) positioning method or ii) a multi-round trip time (RTT) positioning method, but is not limited thereto. As described above, a path specific measurement/report may be performed for other positioning methods in addition to the DL TDOA/multi-RTT positioning methods.

The PRS is transmitted from the base station to the UE. For example, the base station may be based on the reference source of FIG. 7, and the PRS may be based on the radio signals of FIG. 7. The transmission of the PRS by the base station may be performed as defined in Tables 6 and 7 above.

According to an embodiment, the message including the capability information may be received based on an LTE positioning protocol (LPP) procedure (e.g., Procedures related to capability transfer). For example, the message including the capability information may be an LPP message (ProvideCapabilities message).

According to an embodiment, the capability information may include i) information representing whether to support a measurement for a first path related to the PRS and/or ii) information representing whether to support a measurement for at least one additional path related to the PRS. In this instance, the information representing whether to support the measurement for the at least one additional path related to the PRS may indicate the number (e.g., 4, 6 or 8) of additional paths supported by the UE. The present embodiment may be based on embodiments related to the capability report described above.

For example, the capability information may be defined for each positioning method. Specifically, the capability information may include capability information related to the DL TDOA (e.g., nr-DL-TDOA-ProvideCapabilities) and/or capability information related to the multi-RTT (e.g., nr-Multi-RTT-ProvideCapabilities).

As a specific example, the capability information (e.g., nr-DL-TDOA-ProvideCapabilities, nr-Multi-RTT-ProvideCapabilities) for each positioning method may include i) information (e.g., supportOfDL-PRS-FirstPathRSRP) representing whether to support a measurement for a first path related to the PRS and/or ii) information (e.g., additionalPathsExtSupport) representing whether to support a measurement for at least one additional path related to the PRS. The supportOfDL-PRS-FirstPathRSRP may be information (or field) indicating whether a target device supports DL PRS RSRPP of a first path measurement for the positioning method (e.g., DL-TDOA/Multi-RTT).

The additionalPathsExtSupport may be information (or field) indicating that the target device supports nr-AdditionalPathListExt. The additionalPathsExtSupport may indicate the number (e.g., 4, 6 or 8) of additional paths supported by the target device. In this instance, the nr-AdditionalPathListExt provides information for the additional paths related to the PRS. For example, if the number of additional paths supported by the UE is 4, the nr-AdditionalPathListExt may include information for each of the four paths. The information for each of the four paths may include i) timing information (e.g., nr-RelativeTimeDifference), ii) quality information (e.g., nr-PathQuality) and/or iii) DL PRS RSRPP.

The timing information (e.g., nr-RelativeTimeDifference) may be defined as a value related to detection timing of a path based on a reference resource. For example, if the timing information is a positive number, it may mean that the path is detected later in time than a path detected based on the reference resource (timing of the path is later than timing of the path based on the reference resource). For example, if the timing information is a negative number, it may mean that the path is detected earlier in time than a path detected based on the reference resource (timing of the path is earlier than timing of the path based on the reference resource).

The quality information (e.g., nr-PathQuality) may include information on a best estimate of the quality of the detected timing of the additional path and resolution information related to the estimate (e.g., 0.1, 1, 10, 30 metre (meter), etc.).

According to the step S 1510, an operation of the location server (100/200 of FIGS. 16 to 20) to receive the message including the capability information from the UE (100/200 of FIGS. 16 to 20) may be implemented by a device of FIGS. 16 to 20. For example, referring to FIG. 17, one or more processors 202 may control one or more transceivers 206 and/or one or more memories 204 so as to receive the message including the capability information from the UE 100.

In the step S 1520, the location server receives the information on the measurement of the PRS from the UE.

The reception of the information on the measurement of the PRS may be performed as defined in Table 7 above. For example, the information on the measurement of the PRS may include a reference signal time difference (RSTD) related to the PRS and/or a reference signal received power (RSRP) related to the PRS.

According to an embodiment, a message including the information on the measurement of the PRS may be received based on an LTE positioning protocol (LPP) procedure (e.g., procedures related to location information transfer). For example, the message including the information on the measurement of the PRS may be an LPP message (ProvideLocationInformation message).

According to an embodiment, the information on the measurement of the PRS may include a DL PRS reference signal received path power (RSRPP) for one or more paths related to the PRS. The DL PRS RSRPP may follow the definition of Table 13. The one or more paths related to the PRS may be paths based on a capability of the UE. For example, the one or more paths related to the PRS may include the first path. For example, the one or more paths related to the PRS may include the first path and the at least one additional path (e.g., 4, 6 or 8 additional paths).

According to an embodiment, the information on the measurement of the PRS may include i) timing information related to each path of the at least one additional path and ii) information representing a quality related to each path of the at least one additional path. The timing information means the above-described timing information (e.g., nr-RelativeTimeDifference), and the information representing the quality means the above-described quality information (e.g., nr-PathQuality).

According to an embodiment, based on the one or more paths related to the PRS including the first path and the at least one additional path, the DL PRS RSRPP related to the at least one additional path may be greater than a minimum threshold determined based on a DL PRS RSRPP related to the first path and a preset offset. The following effects can be derived through the present embodiment. When performing measurement and reporting operations for the additional paths, meaningful values in determining LoS/NLoS can be reported to the location server.

According to an embodiment, only DL PRS RSRPP determined based on the above-described expected path RSRP (i.e., expected RSRPP) and uncertainty information related to it (range information related to the expected RSRPP) among the DL PRS RSRPPs measured by the UE may be reported. The present embodiment may be based on the method #1 of the measurement report described above. This is described in detail below.

For example, the DL PRS RSRPP included in the information on the measurement of the PRS may be based on a DL PRS RSRPP with a value within a pre-defined range among DL PRS RSRPPs measured for the one or more paths related to the PRS. The pre-defined range may be determined based on an expected value related to the DL PRS RSRPP and range information (uncertainty) related to the expected value. The expected value related to the DL PRS RSRPP and the range information related to the expected value may be configured by the location server or the base station.

For example, the location server may transmit, to the UE, configuration information including the expected value related to the DL PRS RSRPP and the range information related to the expected value. In this instance, the configuration information may be based on the LPP message (e.g., ProvideAssistanceData). The operation of transmitting the configuration information may be performed before the step S1510.

According to the step S 1520, an operation of the location server (100/200 of FIGS. 16 to 20) to receive the information on the measurement of the PRS from the UE (100/200 of FIGS. 16 to 20) may be implemented by the device of FIGS. 16 to 20. For example, referring to FIG. 17, one or more processors 202 may control one or more transceivers 206 and/or one or more memories 204 so as to receive the information on the measurement of the PRS from the UE 100.

The method may further include a step of transmitting a message including request information for the measurement of the PRS. Specifically, in this step, the location server may transmit, to the UE, the message including the request information for the measurement of the PRS. This step may be performed before the step S1510.

According to an embodiment, the request information for the measurement of the PRS may include i) information indicating a provision of measurement for the first path and/or ii) information indicating a provision of measurement for the at least one additional path. For example, the message including the request information for the measurement of the PRS may be the LPP message (e.g., RequestLocationInformation message). The request information for the measurement of the PRS may include request information for each positioning method. For example, the request information for the measurement of the PRS may include request information related to the multi-RTT (e.g., NR-Multi-RTT-RequestLocationInformation) and/or request information related to the DL-TDOA (e.g., NR-DL-TDOA-RequestLocationInformation). The request information related to each positioning method may include i) information (e.g., nr-RequestedMeasurements) indicating a provision of measurement for the first path and/or ii) information (e.g., additionalPathsExt and/or additionalPathsDL-PRS-RSRP-Request) indicating a provision of measurement for the at least one additional path. For example, if a value of a second bit (e.g., firstPathRsrpReq-r17) of the nr-RequestedMeasurements is set to 1, it may mean that the provision of measurement for the first path is requested.

For example, the additionalPathsExt may indicate that the target device has been requested to provide measurement information (e.g., nr-AdditionalPathListExt) related to the above-described additional path. The additionalPathsDL-PRS-RSRP-Request may indicate that the target device has been requested to provide DL PRS RSRPP for the additional path in the nr-AdditionalPathListExt.

The method may further include a step of transmitting a message including request information for the capability information. Specifically, in this step, the location server transmits, to the UE, the message including the request information for the capability information. This step may be performed before the step S1510.

### Example of communication system applied to present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 16 illustrates a communication system 1 applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Example of wireless device applied to the present disclosure

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Example of signal processing circuit applied to the present disclosure

FIG. 18 illustrates a signal process circuit for a transmission signal.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

### Example of application of wireless device applied to the present disclosure

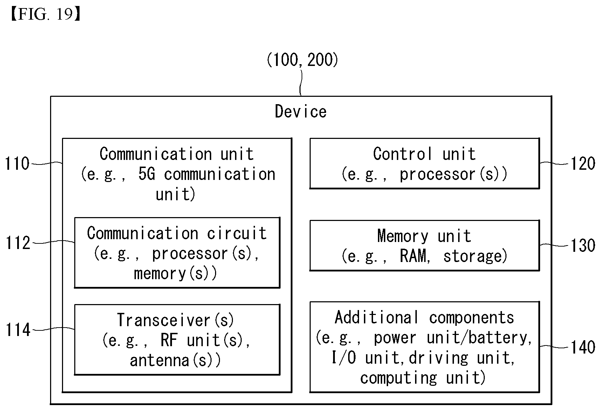

FIG. 19 illustrates another example of a wireless device applied to the present disclosure.

The wireless device may be implemented in various forms according to a use-case/service (refer to FIG. 16). Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Example of hand-held device applied to the present disclosure

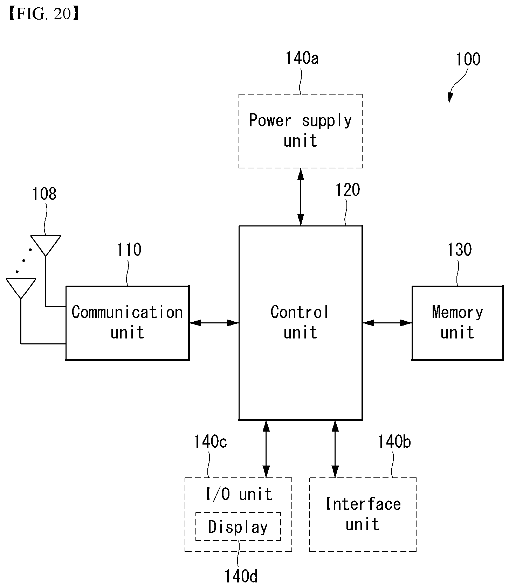

FIG. 20 illustrates a hand-held device applied to the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Here, the wireless communication technology implemented in the device (FIGS. 20 to 24) of the present disclosure may include LTE, NR, and 6G as well as Narrowband Internet of Things (NB-IoT) for low-power communication. For example, the NB-IoT technology may be an example of a LPWAN (Low Power Wide Area Network) technology, and may be implemented in standards such as LTE Cat NB1 and/or LTE Cat NB2, and is not limited to the above-described name.

Additionally or alternatively, the wireless communication technology implemented in the device (FIGS. 20 to 24) of the present disclosure may perform communication based on the LTE-M technology. For example, the LTE-M technology may be an example of LPWAN technology, and may be called by various names such as enhanced machine type communication (eMTC). For example, LTE-M technology may be implemented in at least one of various standards such as 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M, and is not limited to the above-described name.

Additionally or alternatively, the wireless communication technology implemented in the device (FIGS. 20 to 24) of the present disclosure may include at least one of ZigBee, Bluetooth, and Low Power Wide Area Network (LPWAN) in consideration of low power communication, and is not limited to the above-described name. For example, the ZigBee technology may generate PAN (personal area networks) related to small/low-power digital communication based on various standards such as IEEE 802.15.4, and may be called by various names.

The embodiments of the present disclosure described hereinbelow are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

1. A method of a user equipment (UE) for transmitting information on a measurement of a positioning reference signal (PRS) in a wireless communication system, the method comprising:
transmitting, to a location server, a message including capability information, the capability information including information related to a positioning method supported by the UE;
receiving the PRS from a base station; and
transmitting, to the location server, a message including the information on the measurement of the PRS,
wherein the information on the measurement of the PRS includes a DL PRS reference signal received path power (RSRPP) for one or more paths related to the PRS, and
wherein the capability information includes i) information representing whether to support a measurement for a first path related to the PRS and/or ii) information representing whether to support a measurement for at least one additional path related to the PRS.

2. The method of claim 1, further comprising:
receiving, from the location server, a message including request information for the measurement of the PRS,
wherein the request information for the measurement of the PRS includes i) information indicating a provision of the measurement for the first path and/or ii) information indicating a provision of the measurement for the at least one additional path.

3. The method of claim 1, wherein the information on the measurement of the PRS includes i) timing information related to each path of the at least one additional path and ii) information representing a quality related to each path of the at least one additional path.

4. The method of claim 1, further comprising:
receiving, from the location server, a message including request information for the capability information.

5. The method of claim 1, wherein, based on the one or more paths related to the PRS including the first path and the at least one additional path, a DL PRS RSRPP related to the at least one additional path is greater than a minimum threshold determined based on a DL PRS RSRPP related to the first path and a preset offset.

6. The method of claim 1, wherein the positioning method is i) a downlink-time difference of arrival (DL-TDOA) positioning method or ii) a multi-round trip time (RTT) positioning method.

7. The method of claim 1, wherein the message including the capability information is transmitted based on an LTE positioning protocol (LPP) procedure, and
wherein the message including the information on the measurement of the PRS is transmitted based on the LPP procedure.

8. The method of claim 1, wherein the information representing whether to support the measurement for the at least one additional path related to the PRS indicates a number of additional paths supported by the UE.

9. The method of claim 1, wherein the DL PRS RSRPP included in the information on the measurement of the PRS is based on a DL PRS RSRPP with a value within a pre-defined range among DL PRS RSRPPs measured for the one or more paths related to the PRS, and
wherein the pre-defined range is determined based on an expected value related to the DL PRS RSRPP and range information related to the expected value.

10. The method of claim 9, further comprising:
receiving, from the location server, configuration information including the expected value related to the DL PRS RSRPP and the range information related to the expected value.

11. A user equipment (UE) configured to transmit information on a measurement of a positioning reference signal (PRS) in a wireless communication system, the UE comprising:
one or more transceivers;
one or more processors configured to control the one or more transceivers; and
one or more memories operably connected to the one or more processors,
wherein the one or more memories are configured to store instructions performing operations based on being executed by the one or more processors,
wherein the operations comprise:
transmitting, to a location server, a message including capability information, the capability information including information related to a positioning method supported by the UE;
receiving the PRS from a base station; and
transmitting, to the location server, a message including the information on the measurement of the PRS,
wherein the information on the measurement of the PRS includes a DL PRS reference signal received path power (RSRPP) for one or more paths related to the PRS, and
wherein the capability information includes i) information representing whether to support a measurement for a first path related to the PRS and/or ii) information representing whether to support a measurement for at least one additional path related to the PRS.

12. A device controlling a user equipment (UE) to transmit information on a measurement of a positioning reference signal (PRS) in a wireless communication system, the device comprising:
one or more processors; and
one or more memories operably connected to the one or more processors,
wherein the one or more memories are configured to store instructions performing operations based on being executed by the one or more processors,
wherein the operations comprise:
transmitting, to a location server, a message including capability information, the capability information including information related to a positioning method supported by the UE;
receiving the PRS from a base station; and
transmitting, to the location server, a message including the information on the measurement of the PRS,
wherein the information on the measurement of the PRS includes a DL PRS reference signal received path power (RSRPP) for one or more paths related to the PRS, and
wherein the capability information includes i) information representing whether to support a measurement for a first path related to the PRS and/or ii) information representing whether to support a measurement for at least one additional path related to the PRS.

13. One or more non-transitory computer readable mediums storing one or more instructions,
wherein the one or more instructions perform operations based on being executed by one or more processors,
wherein the operations comprise:
transmitting, to a location server, a message including capability information, the capability information including information related to a positioning method supported by the UE;
receiving the PRS from a base station; and
transmitting, to the location server, a message including the information on the measurement of the PRS,
wherein the information on the measurement of the PRS includes a DL PRS reference signal received path power (RSRPP) for one or more paths related to the PRS, and
wherein the capability information includes i) information representing whether to support a measurement for a first path related to the PRS and/or ii) information representing whether to support a measurement for at least one additional path related to the PRS.

14. A method of a location server for receiving information on a measurement of a positioning reference signal (PRS) in a wireless communication system, the method comprising:
receiving, from a user equipment (UE), a message including capability information, the capability information including information related to a positioning method supported by the UE; and
receiving, from the UE, a message including the information on the measurement of the PRS,
wherein the information on the measurement of the PRS includes a DL PRS reference signal received path power (RSRPP) for one or more paths related to the PRS, and
wherein the capability information includes i) information representing whether to support a measurement for a first path related to the PRS and/or ii) information representing whether to support a measurement for at least one additional path related to the PRS.

15. A location server receiving information on a measurement of a positioning reference signal (PRS) in a wireless communication system, the location server comprising:
one or more transceivers;
one or more processors configured to control the one or more transceivers; and
one or more memories operably connected to the one or more processors,
wherein the one or more memories are configured to store instructions performing operations based on being executed by the one or more processors,
wherein the operations comprise:
receiving, from a user equipment (UE), a message including capability information, the capability information including information related to a positioning method supported by the UE; and
receiving, from the UE, a message including the information on the measurement of the PRS,
wherein the information on the measurement of the PRS includes a DL PRS reference signal received path power (RSRPP) for one or more paths related to the PRS, and
wherein the capability information includes i) information representing whether to support a measurement for a first path related to the PRS and/or ii) information representing whether to support a measurement for at least one additional path related to the PRS.
